(19) 

Europäisches
Patentamt
European
Patent Office
Office européen
des brevets

(11) **EP 4 317 324 A1**

(12) **EUROPEAN PATENT APPLICATION**
published in accordance with Art. 153(4) EPC

(43) Date of publication:
**07.02.2024 Bulletin 2024/06**

(21) Application number: **22780244.4**

(22) Date of filing: **18.03.2022**

(51) International Patent Classification (IPC):
*C08L 101/00* *(2006.01)*       *C08J 5/18* *(2006.01)*
*C08L 51/04* *(2006.01)*       *C08L 71/02* *(2006.01)*

(52) Cooperative Patent Classification (CPC):
**C08J 5/18; C08L 51/04; C08L 71/02; C08L 101/00**

(86) International application number:
**PCT/JP2022/012606**

(87) International publication number:
**WO 2022/210029 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.03.2021 JP 2021054555**

(71) Applicant: **Mitsubishi Chemical Corporation
Chiyoda-ku
Tokyo 100-8251 (JP)**

(72) Inventor: **ABE Junichi
Tokyo 100-8251 (JP)**

(74) Representative: **Ter Meer Steinmeister & Partner
Patentanwälte mbB
Nymphenburger Straße 4
80335 München (DE)**

(54) **RESIN COMPOSITION, MOLDED BODY, AND FILM**

(57)    A rubber-containing polymer having an average particle diameter of 200 nm or more, a thermoplastic resin having a mass average molecular weight of 100,000 or less, and a plasticizer are contained, in which a ratio of the plasticizer with respect to 100 parts by mass as a total amount of the rubber-containing polymer and the thermoplastic resin is 1 to 20 parts by mass.

## FIG. 1

**Description**

[Technical Field]

The present invention relates to a resin composition, a molded body, and a film.

Priority is claimed on Japanese Patent Application No. 2021-054555, filed March 29, 2021, the content of which is incorporated herein by reference.

[Background Art]

Conventionally, a resin molded body using a resin containing a rubber component has been widely used. In particular, a film constituted of a molded body formed from an acrylic resin containing a rubber component, has been used for applications of being laminated on the surface of various molded products, such as resin molded products, wood products, and metal molded products, for example, by taking advantage of excellent characteristics such as transparency, weather resistance, flexibility, and processability. Examples of specific applications in such a case include skin material for applications for building materials such as vehicle interiors, furniture, door materials, window frames, skirting boards, and bathroom interiors; marking films; and high-intensity reflective material coating films.

As films used for the above-mentioned applications, various films have been conventionally proposed and put into practical use, but it is also known to perform embossing processing on films to further improve designability.

For example, Patent Document 1 proposes a method of processing an acrylic resin film formed from a rubber-containing acrylic resin and/or a thermoplastic resin to impart an embossed shape.

Furthermore, Patent Document 2 proposes a method of processing an acrylic resin laminate film formed from a reactive group-free acrylic resin composition containing acrylic rubber particles, a thermoplastic resin, and an additive, and from a reactive group-containing acrylic resin composition to impart an embossed shape.

[Citation List]

[Patent Documents]

[Patent Document 1]
PCT International Publication No. WO2011/074605
[Patent Document 2]
Japanese Unexamined Patent Application, First Publication No. 2017-196814

[Summary of Invention]

[Technical Problem]

However, it became clear that, regarding the films of Patent Document 1 and Patent Document 2, when manufacturing the films, the films may stick to each other in a step of recovering by winding the films in a roll shape, for example. When such sticking between films occurs frequently, there is a risk of a deterioration in external appearance quality of films or a deterioration in embossing processability for films.

The present invention has been made in view of the above-mentioned problems, and an object thereof is to provide a resin composition which makes it possible to obtain a film capable of preventing the occurrence of sticking during manufacturing, having favorable external appearance characteristics, and having excellent embossing processability, and to provide a molded body and a film obtained thereby.

[Solution to Problem]

The inventors of the present invention have made extensive studies to achieve the above-mentioned object. As a result, it was found that the occurrence of sticking during manufacturing can be prevented by manufacturing a film, which is a molded product, using a resin composition optimized such that the resin composition has a characteristic formulation. Thus, it was found that the external appearance characteristics of the film are favorable and embossing processability is also improved, thereby completing the present invention.

That is, the present invention includes the following aspects.

[1] A resin composition comprising:

a rubber-containing polymer having an average particle diameter of 200 nm or more;
a thermoplastic resin having a mass average molecular weight of 100,000 or less; and
a plasticizer,
wherein a ratio of the plasticizer with respect to 100 parts by mass as a total amount of the rubber-containing polymer and the thermoplastic resin is 1 to 20 parts by mass.

[2] A resin composition comprising:

a rubber-containing polymer having an average particle diameter of 200 nm or more;
a thermoplastic resin having a storage elastic modulus G' of $0.1 \times 10^5$ to $1.2 \times 10^5$ Pa at 200°C; and
a plasticizer,
wherein a ratio of the plasticizer with respect to 100 parts by mass as a total amount of the rubber-containing polymer and the thermoplastic resin is 1 to 20 parts by mass.

[3] The resin composition according to [1] or [2], wherein the rubber-containing polymer comprises a structural unit derived from an alkyl methacrylate.

[4] The resin composition according to any one of [1] to [3], wherein an average particle diameter of the rubber-containing polymer is 400 nm or less.

[5] The resin composition according to any one of [1] to [4], wherein a ratio of the rubber-containing polymer with respect to 100% by mass of the thermoplastic resin is 0.8% by mass or more and less than 60% by mass.

[6] The resin composition according to any one of [1] to [5], wherein a ratio of the thermoplastic resin with respect to 100% by mass of the resin composition is 62% by mass or more.

[7] The resin composition according to any one of [1] to [6], wherein a ratio of the thermoplastic resin with respect to 100% by mass of the resin composition is 98% by mass or less.

[8] The resin composition according to any one of [1] to [7], wherein a gel content of the resin composition with respect to 100% by mass of the resin composition is 40% by mass or less.

[9] The resin composition according to any one of [1] to [8], wherein the plasticizer is a polyalkylene glycol.

[10] The resin composition according to any one of [1] to [9], wherein a number average molecular weight of the plasticizer is 10,000 or more.

[11] The resin composition according to any one of [1] to [10], further comprising a hindered amine light stabilizer having a molecular weight of 500 or more.

[12] The resin composition according to any one of [1] to [11], wherein a ratio of the rubber-containing polymer with respect to 100% by mass of the resin composition is preferably 0.8% by mass or more and 50% by mass or less, more preferably 4% by mass or more and 45% by mass or less, and further preferably 8% by mass or more and 40% by mass or less.

[13] The resin composition according to any one of [1] to [12], wherein a ratio of the thermoplastic resin with respect to 100% by mass of the resin composition is preferably 50% by mass or more and 98% by mass or less, more preferably 55% by mass or more and 95% by mass or less, and further preferably 62% by mass or more and 90% by mass or less.

[14] The resin composition according to any one of [1] to [13], wherein a ratio of the plasticizer with respect to a total of 100 parts by mass of the rubber-containing polymer and the thermoplastic resin is preferably 1 part by mass or more and 20 parts by mass or less, more preferably 5 parts by mass or more and 18 parts by mass or less, and further preferably 7 parts by mass or more and 15 parts by mass or less.

[15] The resin composition according to any one of [1] to [14], wherein an average particle diameter of the rubber-containing polymer is preferably 200 nm or more and 400 nm or less, more preferably 220 nm or more and 400 nm or less, further preferably 230 nm or more and 350 nm or less, and particularly preferably 250 nm or more and 300 nm or less.

[16] The resin composition according to any one of [1] to [15], wherein the rubber-containing polymer is a graft copolymer in which a vinyl monomer is graft-polymerized to a polymer (A), which is a rubber component, and the graft copolymer has a portion derived from the polymer (A) and a graft part derived from a polymer (B) of the vinyl monomer.

[17] The resin composition according to [16], wherein the polymer (A) preferably comprises a structural unit derived from an alkyl (meth)acrylate, more preferably comprises a structural unit derived from an alkyl (meth)acrylate having an alkyl group having 1 to 8 carbon atoms, further preferably comprises a structural unit derived from an alkyl acrylate having an alkyl group having 1 to 8 carbon atoms, and particularly preferably comprises both a structural unit derived from an alkyl acrylate having an alkyl group having 1 to 8 carbon atoms and a structural unit derived from an alkyl methacrylate having an alkyl group having 1 to 8 carbon atoms.

[18] The resin composition according to [16] or [17], wherein the polymer (A) preferably comprises a structural unit derived from another monofunctional vinyl monomer, more preferably comprises a structural unit derived from an aromatic vinyl monomer, and further preferably comprises a structural unit derived from styrene.

[19] The resin composition according to any one of [16] to [18], wherein a ratio of the structural unit derived from an alkyl acrylate with respect to 100% by mass of the polymer (A) is preferably 30% by mass or more and 99% by mass or less, more preferably 40% by mass or more and 95% by mass or less, and further preferably 50% by mass or more and 90% by mass or less.

[20] The resin composition according to any one of [16] to [19], wherein a ratio of the structural unit derived from an alkyl methacrylate with respect to 100% by mass of the polymer (A) is preferably 1% by mass or more and 70% by mass or less, more preferably 3% by mass or more and 60% by mass or less, and further preferably 5% by mass or more and 50% by mass or less.

[21] The resin composition according to any one of [16] to [20], wherein a ratio of the structural unit derived from a monofunctional vinyl monomer with respect to 100% by mass of the polymer (A) is preferably more than 0% by mass and 20% by mass or less, more preferably 1% by mass or more and 15% by mass or less, and further preferably 3% by mass or more and 10% by mass or less.

[22] The resin composition according to any one of [16] to [21], wherein a ratio of all of the structural units derived from the polymer (A) with respect to 100% by mass of the rubber-containing polymer is preferably 5% by mass or more and 70% by mass or less, and more preferably 10% by mass or more and 60% by mass or less.

[23] The resin composition according to any one of [16] to [22], wherein the polymer (B) constituting the graft part preferably comprises a structural unit derived from an alkyl methacrylate, and more preferably comprises a structural unit derived from an alkyl methacrylate having an alkyl group having 1 to 4 carbon atoms.

[24] The resin composition according to any one of [16] to [23], wherein the polymer (B) constituting the graft part preferably comprises a structural unit derived from an alkyl acrylate, and more preferably comprises a structural unit derived from an alkyl acrylate having an alkyl group having 1 to 8 carbon atoms.

[25] The resin composition according to any one of [16] to [24], wherein the polymer (B) constituting the graft part preferably comprises a structural unit derived from a monofunctional vinyl monomer, more preferably comprises a structural unit derived from an aromatic vinyl monomer, and further preferably comprises a structural unit derived from styrene.

[26] The resin composition according to any one of [16] to [25], wherein a ratio of the structural unit derived from an alkyl methacrylate with respect to 100% by mass of the polymer (B) is preferably 30% by mass or more and 99% by mass or less, more preferably 40% by mass or more and 95% by mass or less, and further preferably 50% by mass or more and 90% by mass or less.

[27] The resin composition according to any one of [16] to [26], wherein a ratio of the structural unit derived from an alkyl acrylate with respect to 100% by mass of the polymer (B) is preferably 1% by mass or more and 70% by mass or less, more preferably 5% by mass or more and 60% by mass or less, and further preferably 10% by mass or more and 50% by mass or less.

[28] The resin composition according to any one of [16] to [27], wherein a ratio of the structural unit derived from a monofunctional vinyl monomer with respect to 100% by mass of the polymer (B) is preferably 0% by mass or more and 20% by mass or less, more preferably 1% by mass or more and 15% by mass or less, and further preferably 3% by mass or more and 10% by mass or less.

[29] The resin composition according to any one of [16] to [28], wherein a ratio of all of the structural units of the polymer (B) with respect to 100% by mass of the rubber-containing polymer is preferably 30% by mass or more and 70% by mass or less, and more preferably 40% by mass or more and 60% by mass or less.

[30] The resin composition according to any one of [1] to [29], wherein a gel content of the rubber-containing polymer with respect to 100% by mass of the rubber-containing polymer is preferably 80% by mass or more, and more preferably 85% by mass or more.

[31] The resin composition according to any one of [1] to [30], wherein a mass average molecular weight of the thermoplastic resin is preferably 20,000 or more and 100,000 or less, more preferably 30,000 or more and 90,000 or less, and further preferably 50,000 or more and 80,000 or less.

[32] The resin composition according to any one of [1] to [31], wherein a storage elastic modulus G' of the thermoplastic resin at 200°C is preferably $0.1 \times 10^5$ to $1.2 \times 10^5$ Pa, more preferably $0.12 \times 10^5$ Pa or more and $1.2 \times 10^5$ Pa or less, particularly preferably $0.14 \times 10^5$ Pa or more and $1.0 \times 10^5$ Pa or less, and most preferably $0.15 \times 10^5$ Pa or more and $0.8 \times 10^5$ Pa or less.

[33] The resin composition according to any one of [1] to [32], wherein the thermoplastic resin is preferably a (meth)acrylic resin, is more preferably a (meth)acrylic resin comprising an alkyl methacrylate as a structural unit, and is further preferably a (meth)acrylic resin comprising, as a structural unit, an alkyl methacrylate having an alkyl group having 1 to 4 carbon atoms in the alkyl group.

[34] The resin composition according to any one of [1] to [33], wherein a total ratio of the structural unit derived from an alkyl methacrylate contained in the thermoplastic resin with respect to 100% by mass of the thermoplastic resin is preferably 50% by mass or more and 100% by mass or less, more preferably 70% by mass or more and 100% by mass or less, and further preferably 80% by mass or more and 95% by mass or less.

[35] The resin composition according to any one of [1] to [34], wherein a total ratio of the structural unit derived from an alkyl acrylate contained in the thermoplastic resin with respect to 100% by mass of the thermoplastic resin is preferably 1% by mass or more and 50% by mass or less, more preferably 3% by mass or more and 30% by mass or less, and further preferably 5% by mass or more and 20% by mass or less.

[36] The resin composition according to any one of [1] to [35], wherein the plasticizer is preferably a polyalkylene glycol, and is more preferably a polyethylene glycol.

[37] The resin composition according to any one of [1] to [36], wherein a number average molecular weight of the plasticizer is preferably 10,000 or more and 30,000 or less, and more preferably 15,000 or more and 25,000 or less.

[38] The resin composition according to any one of [1] to [37], further comprising a hindered amine light stabilizer, wherein a molecular weight of the hindered amine light stabilizer is preferably 500 or more and 4,500 or less, more preferably 700 or more and 4,000 or less, and further preferably 1,000 or more and 3,500 or less.

[39] The resin composition according to any one of [1] to [38], further comprising a hindered amine light stabilizer, wherein a content of the hindered amine light stabilizer with respect to 100 parts by mass of the resin composition is preferably 0.1 to 5 parts by mass, more preferably 0.1 parts by mass or more and 2 parts by mass or less, and further preferably 0.2 parts by mass or more and 1.5 parts by mass or less.

[40] The resin composition according to any one of [1] to [39], wherein a gel content in 100% by mass of the resin composition is preferably 0.6% by mass or more and 40% by mass or less, more preferably 3% by mass or more and 35% by mass or less, and further preferably 6% by mass or more and 30% by mass or less.

[41] The resin composition according to any one of [1] to [40], further comprising a hindered phenol antioxidant, wherein a molecular weight of the hindered phenol antioxidant is preferably 500 or more and 2,000 or less, and more preferably 750 or more and 1,500 or less.

[42] The resin composition according to any one of [1] to [41], further comprising a hindered phenol antioxidant, wherein a content of the hindered phenol antioxidant with respect to 100 parts by mass of the resin composition is preferably 0.1 to 5 parts by mass, more preferably 0.1 parts by mass or more and 2 parts by mass or less, and further preferably 0.2 parts by mass or more and 1.5 parts by mass or less.

[43] The resin composition according to any one of [1] to [42], wherein a film obtained by melting extrusion molding of the resin composition is placed on an embossing metal mold heated to 200°C (arithmetic average roughness Ra of 3 nm, maximum height Rz of 23 nm), a 6 cm square 82 g SUS plate is placed thereon for 1 minute to perform embossing processing, and a value when an 85° gloss value of the film after the processing is measured is preferably 15% or less, more preferably 0.1% or more and less than 15%, further preferably 0.1% or more and 13% or less, and particularly preferably 0.2% or more and 10% or less.

[44] The resin composition according to any one of [1] to [43], wherein a breaking elongation is preferably 20% or more, and more preferably 20% or more and 100% or less, provided that the breaking elongation is obtained by testing the film obtained by melting extrusion molding of the resin composition in a tensile test in accordance with ISO 527 with a measurement temperature of 23°C, with a test piece width of 1.5 mm, a distance between chucks of 100 mm, and a tensile rate of 100 mm/minute.

[45] The resin composition according to any one of [1] to [44], further comprising a hindered amine light stabilizer, wherein the hindered amine light stabilizer is a compound having a 2,2,6,6-tetramethyl-4-piperidinyl group.

[46] A molded body comprising the resin composition according to any one of [1] to [45].

[47] A film comprising the resin composition according to any one of [1] to [45].

[48] The film according to [47], wherein an 85° gloss level of the film is 15% or less.

[49] The film according to [47] or [48], wherein an 85° gloss level of the film is preferably 15% or less, more preferably 0.1% or more and less than 15%, further preferably 0.1% or more and 13% or less, and particularly preferably 0.2% or more and 10% or less.

[50] A decorative sheet protective film which includes the film according to any one of [47] to [49] to be laminated on a substrate.

[51] A decorative plate comprising: a substrate; and the film according to any one of [47] to [49] on the substrate.

[52] Use of the resin composition according to any one of [1] to [44] for manufacturing a decorative sheet protective film.

[53] Use of the resin composition according to any one of [1] to [44] for manufacturing a decorative plate.

[Advantageous Effects of Invention]

As described above, according to the resin composition of the present invention, the following constitution is employed: a rubber-containing polymer having an average particle diameter of 200 nm or more, a thermoplastic resin having a mass average molecular weight of 100,000 or less, and a plasticizer are contained, in which a ratio of the plasticizer with respect to 100 parts by mass as a total amount of the rubber-containing polymer and the thermoplastic resin is 1 to 20 parts by mass.

Furthermore, according to the resin composition of the present invention, the following constitution is also employed: a rubber-containing polymer having an average particle diameter of 200 nm or more, a thermoplastic resin having a storage elastic modulus G' of $0.1 \times 10^5$ to $1.2 \times 10^5$ Pa at 200°C, and a plasticizer are contained, in which a ratio of the plasticizer with respect to 100 parts by mass as a total amount of the rubber-containing polymer and the thermoplastic resin is 1 to 20 parts by mass.

This makes it possible to inhibit sticking of films to each other from occurring when the films are recovered by being wound into a roll shape in manufacturing a molded body such as a film or the like using the resin composition of the present invention. Thereby, external appearance characteristics are favorable, and embossing processability for a film, which is a molded body, is also improved.

Accordingly, it is possible to provide the resin composition which makes it possible to obtain a film having favorable external appearance characteristics and excellent embossing processability.

Furthermore, the molded body and the film of the present invention contain the above-mentioned resin composition according to the present invention, and thus have excellent external appearance characteristics and are also excellent in embossing processability.

[Brief Description of Drawings]

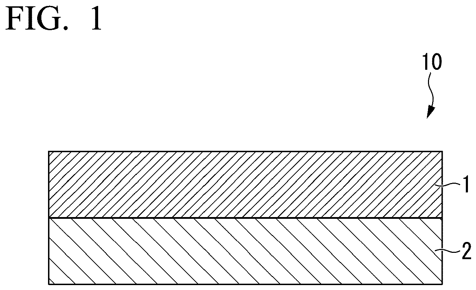

FIG. 1 is a cross-sectional view showing an example of a decorative plate in which a film formed from a resin composition of the present invention is laminated on a substrate.

[Description of Embodiments]

Hereinafter, a resin composition according to the present invention, and a molded body and a film obtained thereby will be described in detail with reference to embodiments thereof. However, the present invention is not limited to the following description, and embodiments other than the exemplary embodiments below can also be appropriately changed and carried out within a range not impairing the gist of the present invention.

In the following description, a monomer means a compound having a polymerizable double bond copolymerizable with other monomers for producing a polymer, and a structural unit means a unit derived from a monomer constituting a polymer.

In addition, (meth)acrylic in the following description means acrylic and/or methacryl.

In addition, the term "to" in the present specification is used in the sense that the numerical values described before and after it are included as a lower limit value and an upper limit value.

<Resin composition>

The components of the resin composition of the present invention will be described in detail below.

Broadly speaking, the resin composition of the present invention is constituted by containing a rubber-containing polymer having an average particle diameter of 200 nm or more, a thermoplastic resin having a mass average molecular weight of 100,000 or less, and a plasticizer. In addition, in the resin composition of the present invention, a ratio of the plasticizer with respect to 100 parts by mass as a total amount of the rubber-containing polymer and the thermoplastic resin is 1 to 20 parts by mass.

Furthermore, broadly speaking, the resin composition of the present invention is constituted by containing a rubber-containing polymer having an average particle diameter of 200 nm or more, a thermoplastic resin having a storage elastic modulus G' of $0.1 \times 10^5$ to $1.2 \times 10^5$ Pa at 200°C, and a plasticizer, in which a ratio of the plasticizer with respect to 100 parts by mass as a total amount of the rubber-containing polymer and the thermoplastic resin is 1 to 20 parts by mass.

By manufacturing a film, which is a molded body, by performing resin molding using the resin composition of the present invention, sticking of films to each other can be prevented from occurring when the films are recovered by being wound into a roll shape, for example. Thereby, the external appearance characteristics of the film are favorable, and the winding shape when wound as a product is also favorable. In addition, an effect which makes it possible to improve the embossing processability for the film, which is a molded body, and easily impart an embossed shape as an excellent external appearance characteristic is also obtained.

The mechanism by which the above-mentioned action effect is obtained is not clear, but the reasons described below are conceivable.

First, by adding the rubber-containing polymer and the plasticizer to the thermoplastic resin, the impact-resistant characteristic of the film obtained by molding processing of the resin composition is improved and the flexibility is also improved, thereby improving the processability when performing embossing processing. However, on the other hand, films that are in close contact with each other may easily stick to each other when the film is recovered by being wound in a roll shape during manufacturing and the like of the film.

On the other hand, first, the resin composition of the present invention contains, as a thermoplastic resin, the thermoplastic resin having a mass average molecular weight of 100,000 or less, which is a low molecular weight, or the thermoplastic resin having a storage elastic modulus G' of $0.1 \times 10^5$ to $1.2 \times 10^5$ Pa at 200°C. Thereby, the elastic modulus is reduced when the resin composition is melted to perform extrusion molding. In addition to this, since the resin composition of the present invention contains the rubber-containing polymer having an average particle diameter of 200 nm or more as a rubber-containing polymer, fine protruded and recessed shapes are easily formed on the surface of a molded film. As described above, it is thought that when the physical properties of both the thermoplastic resin and the rubber-containing polymer contained in the resin composition of the present invention are optimized when combining, this results in a synergistic effect thereof which prevents sticking of films to each other from occurring, thereby making it possible to provide a film excellent in embossing processability.

Hereinafter, each of the components contained in the resin composition of the present invention and the physical properties thereof will be described in detail.

[Rubber-containing polymer]

The rubber-containing polymer contained in the resin composition of the present invention is at least a polymer containing a polymer (A), which is a rubber component, and preferably means a polymer in which a vinyl monomer is polymerized to the polymer (A). The above-mentioned rubber component means a polymer having a glass transition temperature of 0°C or lower.

The average particle diameter of the rubber-containing polymer is 200 nm or more as described above. In addition, particularly from the viewpoint of effectively preventing sticking of films, the average particle diameter of the rubber-containing polymer is preferably 220 nm or more, more preferably 230 nm or more, and further preferably 250 nm or more.

Meanwhile, when the average particle diameter of the rubber-containing polymer is too large, the transparency of the film tends to decrease. Therefore, the average particle diameter of the rubber-containing polymer is preferably 400 nm or less, more preferably 350 nm or less, and further preferably 300 nm or less.

The term "average particle diameter" in the present invention is measured by a dynamic light scattering method and specifically means a value measured by a method described in Examples to be described later.

The rubber-containing polymer is preferably a polymer in which a vinyl monomer is polymerized to the polymer (A), which is a rubber component. More specifically, the rubber-containing polymer is preferably a graft copolymer in which a vinyl monomer is graft-polymerized to the polymer (A). That is, the rubber-containing polymer is preferably a graft copolymer having the polymer (A), and the polymer (B), which is a graft part.

The polymer (A) is not particularly limited, but preferably contains alkyl acrylates as a structural unit. Among them, an alkyl acrylate is preferably an alkyl acrylate having an alkyl group having 1 to 8 carbon atoms. The alkyl group may be linear or branched.

Preferable examples of the alkyl acrylates include methyl acrylate, ethyl acrylate, n-propyl acrylate, i-propyl acrylate, n-butyl acrylate, i-butyl acrylate, t-butyl acrylate, 2-ethylhexyl acrylate, and n-octyl acrylate, among which n-butyl acrylate is preferable. Two or more types of alkyl acrylates may be used.

It is preferable that the polymer (A) further contains alkyl methacrylates as a structural unit. The alkyl methacrylate is not particularly limited, but is preferably an alkyl methacrylate having an alkyl group having 1 to 4 carbon atoms. The alkyl group of the alkyl methacrylate may be linear or branched.

Preferable examples of the alkyl methacrylates include methyl methacrylate, ethyl methacrylate, n-propyl methacrylate, i-propyl methacrylate, n-butyl methacrylate, i-butyl methacrylate, and t-butyl methacrylate. Two or more types of alkyl methacrylates may be used.

The polymer (A) may further contain another monofunctional vinyl monomer as a structural unit. The other monofunctional vinyl monomer is not particularly limited, and examples thereof include other (meth)acrylic monomers other than alkyl (meth)acrylates, aromatic vinyl monomers, and vinyl cyanide monomers.

The other (meth)acrylic monomers other than alkyl (meth)acrylates are also not particularly limited, and examples thereof include ethyl cyanoacrylate, acrylamide, and (meth)acrylic acid.

The aromatic vinyl monomer is also not particularly limited, and examples thereof include styrene and alkyl-substituted styrene.

The vinyl cyanide monomer is also not particularly limited, and examples thereof include acrylonitrile and methacrylonitrile.

Two or more types of other vinyl monomers may be used.

The polymer (A) may further contain a polyfunctional monomer as a structural unit. Examples of the polyfunctional monomers include crosslinkable monomers having two or more copolymerizable double bonds in one molecule, and specific examples thereof include alkylene glycol di(meth)acrylates such as ethylene glycol di(meth)acrylate, 1,3-butylene glycol di(meth)acrylate, 1,4-butylene glycol di(meth)acrylate, and propylene glycol di(meth)acrylate; polyvinylbenzenes such as divinylbenzene and trivinylbenzene; and allyl, methallyl, or crotyl esters of cyanurate monomers such as triallyl cyanurate and triallyl isocyanurate, $\alpha,\beta$-unsaturated carboxylic acids such as allyl methacrylate, or dicarboxylic acids.

The ratio of the alkyl acrylate unit with respect to 100% by mass of the polymer (A) is not particularly limited, but is preferably 30% by mass or more, is more preferably 40% by mass or more, and is further preferably 50% by mass or more from the viewpoint of providing a film having a high breaking elongation. Meanwhile, from the viewpoint of providing a film having high heat resistance, the ratio of the alkyl acrylate unit with respect to 100% by mass of the polymer (A) is preferably 99% by mass or less, is more preferably 95% by mass or less, and is further preferably 90% by mass or less.

The ratio of the alkyl methacrylate unit with respect to 100% by mass of the polymer (A) is also not particularly limited, but is preferably 1% by mass or more, is more preferably 3% by mass or more, and is further preferably 5% by mass or more from the viewpoint of providing a film having a high heat resistance. Meanwhile, from the viewpoint of providing a film having high breaking elongation, the ratio of the alkyl methacrylate unit with respect to 100% by mass of the polymer (A) is preferably 70% by mass or less, is more preferably 60% by mass or less, and is further preferably 50% by mass or less.

The ratio of the monofunctional vinyl monomer unit with respect to 100% by mass of the polymer (A) is also not particularly limited, but is preferably more than 0% by mass, is more preferably 1% by mass or more, and is further preferably 3% by mass or more from the viewpoint of providing a film having high transparency. Meanwhile, from the viewpoint of providing a film having high heat resistance, the ratio of the monofunctional vinyl monomer unit with respect to 100% by mass of the polymer (A) is preferably 20% by mass or less, is more preferably 15% by mass or less, and is further preferably 10% by mass or less.

The ratio of the polyfunctional monomer unit with respect to 100% by mass of the polymer (A) is also not particularly limited, but is preferably 0.1% by mass or more, is more preferably 0.2% by mass or more, and is further preferably 0.3% by mass or more from the viewpoint of providing a film having a high breaking elongation. Meanwhile, from the viewpoint of providing a film having high heat resistance, the ratio of the polyfunctional monomer unit with respect to 100% by mass of the polymer (A) is preferably 10% by mass or less, is more preferably 9% by mass or less, and is further preferably 8% by mass or less.

The glass transition temperature of the polymer (A) is 0°C or lower as described above. In addition, the glass transition temperature of the polymer (A) is preferably -5°C or lower and more preferably -10°C or lower from the viewpoint of obtaining high flexibility. Meanwhile, the glass transition temperature of the polymer (A) is preferably -50°C or higher and more preferably -30°C or higher from the viewpoint of obtaining a high impact-resistant characteristic.

The glass transition temperature described in the present specification refers to a value calculated from a FOX equation using values described in the [Polymer HandBook (J. Brandrup, Interscience, 1989)]. When it is not possible to calculate from the values of the above-mentioned document, a value measured by a differential scanning calorimeter (DSC) may be referred to.

The ratio of the polymer (A) with respect to 100% by mass of the rubber-containing polymer is not particularly limited, but is preferably 5% by mass or more, and more preferably 10% by mass or more from the viewpoint of providing a film having a high impact-resistant characteristic. Meanwhile, the ratio of the polymer (A) with respect to 100% by mass of the rubber-containing polymer is preferably 70% by mass or less and more preferably 60% by mass or less.

A method for producing the polymer (A) is not particularly limited, but manufacturing can be performed by adjusting the formulation ratio of a monomer such that a desired polymer is obtained, and using a conventionally known polymerization method.

The polymer (B) is not particularly limited, and preferably contains alkyl methacrylates as a structural unit. Among them, an alkyl methacrylate is preferably an alkyl methacrylate having an alkyl group having 1 to 4 carbon atoms. The alkyl group may be linear or branched.

Preferable examples of the alkyl methacrylates include methyl methacrylate, ethyl methacrylate, n-propyl methacrylate, i-propyl methacrylate, n-butyl methacrylate, i-butyl methacrylate, and t-butyl methacrylate. Two or more types of alkyl methacrylates may be used.

The polymer (B) is not particularly limited, but preferably further contains alkyl acrylates as a structural unit. Among them, an alkyl acrylate is preferably an alkyl acrylate having an alkyl group having 1 to 8 carbon atoms. The alkyl group may be linear or branched.

Preferable examples of the alkyl acrylates include methyl acrylate, ethyl acrylate, n-propyl acrylate, i-propyl acrylate, n-butyl acrylate, i-butyl acrylate, t-butyl acrylate, 2-ethylhexyl acrylate, and n-octyl acrylate, among which n-butyl acrylate is preferable. Two or more types of alkyl acrylates may be used.

The polymer (B) may further contain another monofunctional vinyl monomer as a structural unit. The other monofunctional vinyl monomer is not particularly limited, and examples thereof include other acrylic monomers other than alkyl acrylates, aromatic vinyl monomers, and vinyl cyanide monomers.

The other acrylic monomers other than alkyl acrylates are not particularly limited, and examples thereof include ethyl cyanoacrylate, acrylamide, and acrylic acid.

The aromatic vinyl monomer is also not particularly limited, and examples thereof include styrene and alkyl-substituted styrene.

The vinyl cyanide monomer is also not particularly limited, and examples thereof include acrylonitrile and methacrylonitrile.

Two or more types of other vinyl monomers may be used.

The ratio of the alkyl methacrylate unit with respect to 100% by mass of the polymer (B) is not particularly limited, but is preferably 30% by mass or more, is more preferably 40% by mass or more, and is further preferably 50% by mass or more from the viewpoint of providing a film having a high breaking elongation. Meanwhile, from the viewpoint of providing a film having high heat resistance, the ratio of the alkyl acrylate unit with respect to 100% by mass of the polymer (A) is preferably 99% by mass or less, is more preferably 95% by mass or less, and is further preferably 90% by mass or less.

The ratio of the alkyl acrylate unit with respect to 100% by mass of the polymer (B) is not particularly limited, but is preferably 1% by mass or more, is more preferably 5% by mass or more, and is further preferably 10% by mass or more from the viewpoint of providing a film having a high breaking elongation. Meanwhile, from the viewpoint of providing a film having high heat resistance, the ratio of the alkyl acrylate unit with respect to 100% by mass of the polymer (B) is preferably 70% by mass or less, is more preferably 60% by mass or less, and is further preferably 50% by mass or less.

The ratio of the monofunctional vinyl monomer unit with respect to 100% by mass of the polymer (B) is not particularly limited, but is preferably 0% by mass or more, is more preferably 1% by mass or more, and is further preferably 3% by mass or more from the viewpoint of improving the transparency of a film. Meanwhile, from the viewpoint of providing a film having high heat resistance, the ratio of the monofunctional vinyl monomer unit with respect to 100% by mass of the polymer (A) is preferably 20% by mass or less, is more preferably 15% by mass or less, and is further preferably 10% by mass or less.

The glass transition temperature of the polymer (B) is 70°C or higher. In addition, the glass transition temperature of the polymer (B) is preferably 75°C or higher and more preferably 80°C or higher from the viewpoint of providing a film having high heat resistance. Meanwhile, the glass transition temperature of the polymer (B) is preferably 120°C or lower and more preferably 110°C or lower from the viewpoint of obtaining a high breaking elongation.

The ratio of the polymer (B) with respect to 100% by mass of the rubber-containing polymer is not particularly limited, but is preferably 30% by mass or more, and more preferably 40% by mass or more from the viewpoint of providing a film having a high heat resistance. Meanwhile, the ratio of the polymer (B) with respect to 100% by mass of the rubber-containing polymer is preferably 70% by mass or less and more preferably 60% by mass or less.

A method for producing the polymer (B) is not particularly limited, but manufacturing can be performed by adjusting the formulation ratio of a monomer such that a desired polymer is obtained, and using a conventionally known polymerization method.

Regarding the gel content of the rubber-containing polymer, from the viewpoint of obtaining a film having high flexibility, the gel content in 100% by mass of the rubber-containing polymer is preferably 80% or more, and more preferably 85% or more.

The gel content of the rubber-containing polymer can be obtained by the same method as a method for measuring the gel content of the resin composition described in Examples to be described later.

A method for producing the rubber-containing polymer is not particularly limited, and obtaining is possible by polymerizing a monomer component that constitutes the polymer (B) in the presence of the polymer (A). Examples thereof include a sequential multistage emulsion polymerization method. The polymer (B) portion, that is, the graft part may be produced by one stage of reaction or may be produced by two or more stages of reaction. When the polymer (B) is produced by two or more stages of reaction, each monomer used may be the same or may be different. In particular, when the polymer (B) is produced by two or more stages of reaction, the overall formulation ratio is preferably in the range described above.

In addition, before producing the polymer (A), it is possible to provide, for example, a step of performing emulsion polymerization using a monomer from which a polymer having a glass transition temperature Tg of 70°C to 120°C can be obtained by homopolymerization. Examples of components of the monomer in this case include the monomer and the like described for the above-mentioned polymer (B).

Examples of surfactants used when producing a polymer by the sequential multistage emulsion polymerization method include anionic, cationic, and nonionic surfactants, which can be used alone or by mixing two or more types thereof.

Examples of the anionic surfactants include carboxylate salts such as rosin soap, potassium oleate, sodium stearate, sodium myristate, sodium N-lauroyl sarcosinate, and dipotassium alkenyl succinate; sulfate ester salts such as sodium lauryl sulfate; sulfonate salts such as sodium dioctyl sulfosuccinate, sodium dodecylbenzenesulfonate, and sodium alkyldiphenyl ether disulfonate; and phosphate ester salts such as sodium polyoxyethylene alkylphenyl ether phosphate and sodium polyoxyethylene alkyl ether phosphate.

Furthermore, specific examples of commercially available anionic surfactants include ELEMINOL NC-718 manufactured by Sanyo Chemical Industries, Ltd.; PHOSPHANOL LO-529, PHOSPHANOL RS-610NA, PHOSPHANOL RS-620NA, PHOSPHANOL RS-630NA, PHOSPHANOL RS-640NA, PHOSPHANOL RS-650NA, and PHOSPHANOL RS-660NA manufactured by TOHO Chemical Industry Co., Ltd.; and LATEMUL P-0404, LATEMUL P-0405, LATEMUL P-0406, and LATEMUL P-0407 manufactured by Kao Corporation.

It is desirable that the use amount of the above-mentioned surfactant is 0.3 parts by mass or more and 2 parts by mass or less when the total amount of the monomer components in all stages of polymerization is 100 parts by mass. The average particle diameter of the sequential multistage polymer can be usually adjusted according to the use amount of the surfactant when obtaining the polymer (A) by emulsion polymerization. When the use amount of the surfactant is increased, the average particle diameter tends to become smaller, and when the use amount of the surfactant is decreased, the average particle diameter tends to become larger.

A latex of the rubber-containing polymer obtained by the sequential multistage emulsion polymerization method can be used as a powder of the rubber-containing polymer by drying the rubber-containing polymer after being recovered from the latex by conventionally known methods such as a salting-out solidification method, an acid precipitation solidification method, a freeze solidification method, and a spray drying method, for example.

When recovering the rubber-containing polymer by a solidification method using a salting-out treatment using a metal salt, from the viewpoint of preventing deterioration by heat during melting extrusion, the residual metal content in the finally obtained rubber-containing polymer is preferably 800 ppm or less, and the smaller the amount, the more preferable.

The mass average molecular weight of the acetone-soluble matter in the rubber-containing polymer is not particularly limited, but is preferably 30,000 or more, and more preferably 40,000 or more from the viewpoint of providing a film having a high breaking elongation. Meanwhile, from the viewpoint of improving the moldability of the film, the mass average molecular weight of the acetone-soluble matter in the rubber-containing polymer is preferably 70,000 or less, and more preferably 65,000 or less.

The mass average molecular weight of the acetone-soluble matter described in the present specification can be measured by gel permeation chromatography (GPC), and specifically, can be measured by the procedures described in (1) to (3) below.

(1) 1 g of the rubber-containing polymer is dissolved in 50 g of acetone and refluxed at a heating temperature of 65°C for 4 hours to obtain an extraction liquid having acetone-soluble matter.
(2) The extraction liquid obtained in (1) above is subjected to centrifugation for 30 minutes at a rotation speed of 14,000 rpm and at a temperature of 4°C using CRG SERIES (manufactured by Hitachi, Ltd.).
(3) After the centrifugation in (2) above, acetone-insoluble matter is removed from the extraction liquid by decantation, and GPC measurement is performed on the acetone-soluble matter obtained by drying at a temperature of 50°C for 24 hours with a vacuum dryer under the following conditions to obtain a mass average molecular weight from a calibration curve from polystyrene standards.

Measurement device: "HLC8220" manufactured by TOSOH CORPORATION
Column: "TSKgel SuperMultiporeHZ-H" manufactured by TOSOH CORPORATION (inner diameter 4.6 mm × length 15 cm × 2 pieces, exclusion limit: $4 \times 10^7$ (estimated))
Eluent: tetrahydrofuran (THF)
Eluent flow volume: 0.35 ml/minute
Measurement temperature: 40°C
Sample injection volume: 10 μl (sample concentration 0.1%)

The ratio of the rubber-containing polymer with respect to 100% by mass of the resin composition is not particularly limited, but is preferably 0.8% by mass or more, is more preferably 4% by mass or more, and is further preferably 8% by mass or more from the viewpoint of obtaining a high film breaking elongation. Meanwhile, from the viewpoint of obtaining a film having excellent embossing processability and heat resistance, the ratio of the rubber-containing polymer with respect to 100% by mass of the resin composition is preferably 50% by mass or less, is more preferably 45% by mass or less, and is further preferably 40% by mass or less.

In the resin composition, the ratio of the rubber-containing polymer with respect to 100% by mass of the thermoplastic resin is not particularly limited, but is preferably 0.8% by mass or more, is more preferably 4% by mass or more, and is further preferably 7% by mass or more from the viewpoint of obtaining a high film breaking elongation. Meanwhile, from the viewpoint of providing a film having excellent embossing processability and heat resistance, the ratio of the rubber-containing polymer with respect to 100% by mass of the thermoplastic resin is preferably less than 60% by mass, is more preferably 50% by mass or less, and is further preferably 45% by mass or less.

[Thermoplastic resin]

In the resin composition of the present invention, the thermoplastic resin is a polymer different from the above-mentioned rubber-containing polymer and is preferably a polymer having a glass transition temperature higher than 0°C. The glass transition temperature described in the present specification can be measured by a method described in Examples to be described later.

The mass average molecular weight of the thermoplastic resin is 100,000 or less as described above. In addition, the mass average molecular weight of the thermoplastic resin is preferably 90,000 or less and is particularly preferably 80,000 or less from the viewpoint of further improving the embossing imparting properties (embossing processability) with respect to molded products such as films obtained by molding the resin composition of the present invention, and also effectively preventing sticking of films to each other. Meanwhile, from the viewpoint of improving the breaking elongation of a film to be obtained, the mass average molecular weight of the thermoplastic resin is preferably 20,000 or more, is more preferably 30,000 or more, further preferably 40,000 or more, particularly preferably 50,000 or more, and most preferably 60,000 or more.

The mass average molecular weight of the thermoplastic resin in the present invention can be measured by a method described in Examples to be described later.

As described above, the storage elastic modulus G' of the thermoplastic resin is $0.1 \times 10^5$ to $1.2 \times 10^5$ Pa at 200°C. In addition, the storage elastic modulus G' of the thermoplastic resin is preferably $1.2 \times 10^5$ Pa or less, is more preferably $1.0 \times 10^5$ Pa or less, and is particularly preferably $0.8 \times 10^5$ Pa or less from the viewpoint of further improving the embossing imparting properties (embossing processability) with respect to molded products such as films obtained by molding the resin composition of the present invention, and also effectively preventing sticking of films to each other. Meanwhile, from the viewpoint of improving the breaking elongation of a film to be obtained, the storage elastic modulus G' of the thermoplastic resin is preferably $0.1 \times 10^5$ Pa or more, is more preferably $0.12 \times 10^5$ Pa or more, is further preferably $0.14 \times 10^5$ Pa or more, and is particularly preferably $0.15 \times 10^5$ Pa or more.

The storage elastic modulus G' at 200°C of the thermoplastic resin in the present invention refers to a storage elastic modulus obtained by measuring a sheet of the thermoplastic resin having a diameter of 25 mm and a thickness of 1.0 mm using a rheometer (manufactured by TA Instruments, DHR-3) under the conditions of pressure-sensitive adhesion jig: φ25 mm parallel plate, strain: 1%, frequency: 1 Hz, temperature: 220°C to 140°C, ramp down rate: 5°C/minute.

The thermoplastic resin may be a homopolymer or a copolymer. When the thermoplastic resin is a copolymer, the thermoplastic resin may be a block polymer, may be a random copolymer, or may be a graft copolymer. Among these, the thermoplastic resin is particularly preferably a random copolymer.

The thermoplastic resin is not particularly limited, and examples thereof include a (meth)acrylic resin, an ABS resin, an AS resin, a polystyrene resin, a polycarbonate resin, a vinyl chloride resin, and a polyester resin. The thermoplastic resin may be a composite resin of two or more types of these. Among these, the thermoplastic resin is preferably a (meth)acrylic resin, and is particularly preferably a (meth)acrylic resin containing an alkyl methacrylate as a structural unit.

The alkyl methacrylate is not particularly limited, but is preferably an alkyl methacrylate having an alkyl group in which the number of carbon atoms of the alkyl group is 1 to 4. In addition, the alkyl methacrylate is preferably an alkyl methacrylate having a linear alkyl group or a branched alkyl group. Specific preferable examples of the alkyl methacrylates include methyl methacrylate, ethyl methacrylate, n-propyl methacrylate, i-propyl methacrylate, n-butyl methacrylate, i-butyl methacrylate, and t-butyl methacrylate. Two or more types of these monomers can be used.

The total ratio of the alkyl methacrylate units with respect to 100% by mass of the thermoplastic resin is not particularly limited, but is preferably 50% by mass or more, is more preferably 70% by mass or more, and is further preferably 80% by mass or more from the viewpoint of heat resistance. Meanwhile, from the viewpoint of flexibility, the total ratio of the alkyl methacrylate units with respect to 100% by mass of the thermoplastic resin is preferably 100% by mass or less, and is more preferably 95% by mass or less.

The thermoplastic resin may contain a structural unit of a vinyl monomer other than the alkyl methacrylate. Examples of such a monomer other than the alkyl methacrylate include alkyl acrylates.

The alkyl acrylate is not particularly limited, but is preferably an alkyl acrylate having an alkyl group in which the number of carbon atoms of the alkyl group is 1 to 8. In addition, the alkyl acrylate is preferably an alkyl acrylate having a linear alkyl group or a branched alkyl group. Specific preferable examples of the alkyl acrylates include methyl acrylate, ethyl acrylate, n-propyl acrylate, i-propyl acrylate, n-butyl acrylate, i-butyl acrylate, t-butyl acrylate, 2-ethylhexyl acrylate, and n-octyl acrylate. Two or more types of these monomers can be used.

The total ratio of the alkyl acrylate units with respect to 100% by mass of the thermoplastic resin is not particularly limited, but is preferably 1% by mass or more, is more preferably 3% by mass or more, and is further preferably 5% by mass or more from the viewpoint of preventing decomposition by heat. Meanwhile, from the viewpoint of providing a film having high heat resistance, the total ratio of the alkyl acrylate unit with respect to 100% by mass of the thermoplastic resin is preferably 50% by mass or less, is more preferably 30% by mass or less, and is further preferably 20% by mass or less.

The thermoplastic resin, which is the (meth)acrylate resin, may further contain a structural unit of another vinyl monomer other than those described above. Such a vinyl monomer is not particularly limited, and examples thereof include acrylic monomers other than the alkyl (meth)acrylates, aromatic vinyl monomers, and vinyl cyanide monomers.

The acrylic monomers other than the alkyl (meth)acrylates are not particularly limited, and examples thereof include ethyl cyanoacrylate, acrylamide, and (meth)acrylic acid.

The aromatic vinyl monomer is not particularly limited, and examples thereof include styrene and alkyl-substituted styrene.

The vinyl cyanide monomer is not particularly limited, and examples thereof include acrylonitrile and methacrylonitrile.

Two or more types of these monomers can be used.

The reduced viscosity of the thermoplastic resin is not particularly limited, but from the viewpoint of improving film-forming properties, the reduced viscosity when measured at 25°C by dissolving 0.1 g of the thermoplastic resin in 100 ml of chloroform is preferably 0.1 L/g or less, is more preferably 0.08 L/g or less, and is further preferably 0.06 L/g or less. Meanwhile, from the viewpoint of providing a film having a high breaking elongation, the reduced viscosity measured by the above-mentioned method is preferably 0.02 L/g or more, and is more preferably 0.03 L/g or more.

As described above, the glass transition temperature of the thermoplastic resin is preferably 0°C or higher, but from the viewpoint of effectively preventing sticking of films, the glass transition temperature is more preferably 50°C or higher, and is further preferably 60°C or higher. Meanwhile, the glass transition temperature of the thermoplastic resin is preferably 120°C or lower, and is more preferably 110°C or lower from the viewpoint of improving the elongation of the film.

The pencil hardness when molding the thermoplastic resin alone into a film shape is not particularly limited, but from the viewpoint of preventing the scratch of the film, the pencil hardness is preferably B or higher, and is more preferably HB or higher, and the higher the value, the more preferable. The above-mentioned pencil hardness can be measured by a method in accordance with ASTM D3363.

The ratio of the thermoplastic resin with respect to 100% by mass of the resin composition is preferably 98% by mass or less, is more preferably 95% by mass, and is further preferably 90% by mass or less from the viewpoint of obtaining a high film breaking elongation. Meanwhile, from the viewpoint of providing a film having excellent embossing processability and heat resistance, the ratio of the thermoplastic resin with respect to 100% by mass of the resin composition is preferably 50% by mass or more, is more preferably 55% by mass or more, and is further preferably 62% by mass or more.

A polymerization method of the thermoplastic resin is not particularly limited, and a conventionally known method may be used to obtain a desired polymer. Examples of such a method include a suspension polymerization method, an emulsion polymerization method, and a bulk polymerization method.

[Plasticizer]

The resin composition of the present invention contains a plasticizer. When the resin composition of the present invention contains the plasticizer, the film is likely to be deformed at a temperature lower than a temperature at which normal plasticization occurs, thereby making transfer of an embossed shape easy. The plasticizer in the present invention is a generic term for additive chemicals that improve flexibility by being added to thermoplastic resins, and refers to a plasticizer by which the MFR of the resin composition measured under the conditions of a temperature of 180°C and a load of 49 N is increased by 30% or more when 5 parts by mass of the plasticizer is added to 100 parts by mass of the resin composition, as compared to the MFR of the resin composition containing 0 parts by mass of the plasticizer.

The molecular weight described in the present specification can be measured by a known method such as liquid chromatography-mass spectrometry (LC-MS).

In addition, the number average molecular weight of the plasticizer in the present invention is a value calculated from a hydroxyl value obtained by the method of JIS K0070-1992.

The plasticizer is not particularly limited, but examples thereof include phthalic acid esters, adipic acid esters, polyesters, trimellitic acid esters, phosphoric acid esters, citric acid esters, epoxidized vegetable oils, sebacic acid esters, azelaic acid esters, maleic acid esters, benzoic acid esters, and polyalkylene glycols. For the plasticizer, one type may be used, or two or more types may be used. Among the above examples, as the plasticizer, polyalkylene glycols are preferable from the viewpoint of improving embossing processability, improving external appearance characteristics, improving weather resistance, and the like.

The polyalkylene glycol is not particularly limited, and examples thereof include mono-ol type butanol, diol type ethylene glycol, propylene glycol, triol type glycerin, and pentaerythritol, among which polyethylene glycol is preferable.

When polyalkylene glycol is used as the plasticizer, the number average molecular weight of the polyalkylene glycol is preferably 10,000 or more, and is more preferably 15,000 or more from the viewpoint of preventing bleeding of additives and the like contained in the film. Meanwhile, the number average molecular weight of the polyalkylene glycol is preferably 30,000 or less from the viewpoint of providing a film having favorable embossing processability. Examples of polyethylene glycols which can be suitably used as the plasticizer include PEG-20000 (trade name) manufactured by Sanyo Chemical Industries, Ltd.

As described above, in the resin composition, the ratio of the plasticizer with respect to a total of 100 parts by mass of the rubber-containing polymer and the thermoplastic resin is preferably 1 part by mass or more, is more preferably 5 parts by mass or more, and is further preferably 7 parts by mass or more from the viewpoint of providing a film having excellent embossing processability. Meanwhile, from the viewpoint of inhibiting a deterioration in the heat resistance of the film, the ratio of the plasticizer with respect to a total of 100 parts by mass of the rubber-containing polymer and the thermoplastic resin is preferably 20 parts by mass or less, is more preferably 18 parts by mass or less, and is further preferably 15 parts by mass or less.

From the viewpoint of embossing processability, the ratio of the plasticizer with respect to 100% by mass of the resin composition is preferably 0.8% by mass or more, is more preferably 4% by mass or more, and is further preferably 7% by mass or more. Meanwhile, from the viewpoint of embossing processability, heat resistance, and inhibition of sticking of films to each other, the ratio of the plasticizer with respect to 100% by mass of the resin composition is preferably 20% by mass or less, is more preferably 18% by mass or less, and is further preferably 15% by mass or less.

[Other additives]

The resin composition of the present invention may further contain other additives, in addition to the rubber-containing polymer, the thermoplastic resin, and the plasticizer described above. Examples of the other additives contained in the resin composition include compounding agents such as light stabilizers, lubricants, processing aids, impact resistance aids, blowing agents, fillers, colorants, ultraviolet absorbers, and antioxidants (oxidation inhibitors), among which light stabilizers, ultraviolet absorbers, and antioxidants are suitable.

when a film obtained by molding processing of the resin composition of the present invention is used as a protective layer of a substrate, it is more preferable that an ultraviolet absorber be contained in the resin composition from the viewpoint of imparting weather resistance to the film. The type of such an ultraviolet absorber is not particularly limited, but a benzotriazole ultraviolet absorber having a molecular weight of 400 or more, a triazine ultraviolet absorber having a molecular weight of 400 or more, or the like is particularly preferable. Examples of commercially available products of the above-mentioned benzotriazole ultraviolet absorber having a molecular weight of 400 or more include Tinuvin 234 (trade name: registered trademark) of BASF Japan Ltd., and ADK STAB LA-31 (trade name: registered trademark) of ADEKA Corporation. Examples of the above-mentioned triazine ultraviolet absorber having a molecular weight of 400 or more include Tinuvin 1577 (trade name: registered trademark) of BASF Japan Ltd., and ADK STAB LA-46 (trade name: registered trademark) of ADEKA Corporation.

The content of the ultraviolet absorber is preferably 0.1 to 10 parts by mass with respect to 100 parts by mass of the resin constituting the film. In addition, from the viewpoint of weather resistance, the content of the ultraviolet absorber is more preferably 0.5 parts by mass or more and is particularly preferably 1 part by mass or more. Meanwhile, the content of the ultraviolet absorber is more preferably 5 parts by mass or less and is particularly preferably 3 parts by mass or less from the viewpoint of inhibiting contamination in a step during film formation and ensuring the transparency of a molded body.

As a light stabilizer, conventionally known light stabilizers can be used, but radical scavengers such as a hindered amine light stabilizer are particularly suitable. Examples of commercially available products of such light stabilizers include ADK STAB LA-57 (trade name: registered trademark) and ADK STAB LA-67 (trade name: registered trademark) of ADEKA Corporation, and CHIMASSORB 2020 FDL (trade name: registered trademark) and CHIMASSORB 944 FDL (trade name: registered trademark) of BASF Japan Ltd.

The molecular weight of the light stabilizer is preferably 500 or more. When the molecular weight is 500 or more, this is advantageous from the viewpoint of bleeding out. The molecular weight is more preferably 600 or more, and is particularly preferably 700 or more. On the other hand, the upper limit of the molecular weight of the light stabilizer is not particularly limited, but is preferably 4,000 or less, for example.

The content of the hindered amine light stabilizer is preferably 0.1 to 5 parts by mass with respect to 100 parts by mass of the resin composition constituting the film. In addition, the content of the hindered amine light stabilizer is more preferably 0.2 parts by mass or more from the viewpoint of light fastness. Meanwhile, the content of the hindered amine light stabilizer is more preferably 2 parts by mass or less, and is particularly preferably 1.5 parts by mass or less from the viewpoint of inhibiting contamination in a step during film formation.

The gel content in 100% by mass of the resin composition is not particularly limited, but is preferably 0.6% by mass or more, is more preferably 3% by mass or more, and is further preferably 6% by mass or more from the viewpoint of the strength of the film. Meanwhile, from the viewpoint of the embossing processability and the heat resistance of the film, the gel content in 100% by mass of the resin composition is preferably 40% by mass or less, is more preferably 35% by mass or less, and is further preferably 30% by mass or less.

The above-mentioned gel content can be obtained by a method described in Examples to be described later.

The melt flow rate (hereinafter, may be abbreviated as MFR) of the resin composition measured under the conditions of a temperature of 180°C and a load of 49 N is preferably 1 g/10 minute or more, and is more preferably 2 g/10 minute or more from the viewpoint of embossing processability. Meanwhile, the MFR measured under the above-mentioned conditions is preferably 20 g/10 minute or less, and is more preferably 15 g/10 minute from the viewpoint of the film-forming properties of the film.

Furthermore, the MFR measured under the conditions of a temperature of 200°C and a load of 49 N is preferably 3 g/10 minute or more, and is more preferably 4 g/10 minute or more from the viewpoint of embossing processability. Meanwhile, the MFR measured under the above-mentioned conditions (180°C, 49 N) is preferably 50 g/10 minute or less, and is more preferably 30 g/10 minute or less from the viewpoint of the film-forming properties of the film.

<Molded body and film>

A molded body according to the present invention contains the resin composition according to the present invention, which has been described above, and for example, a form such as a film as in the present embodiment can be employed. That is, the molded body according to the present invention is obtained by molding processing of the above-mentioned resin composition. When manufacturing the molded body (film) from the resin composition according to the present invention, it is preferable to manufacture by molding the resin composition that has been melt-kneaded, for example.

When the melt-kneading as described above is performed, it is preferable to manufacture by melt-kneading the resin composition in an extruder (not shown), for example. Examples of extruders suitably used in such a manufacturing method include single screw, isodirectional twin screw, different-direction twin screw general devices, and the like. For example, a suitable extruder for manufacturing acrylic resin pellets is a device having a large kneading effect, such as a twin screw kneading extruder.

It is preferable to perform kneading such that the resin temperature during melting extrusion is higher than a set temperature. The resin temperature is preferably 20°C or higher than the set temperature, and is more preferably 40°C or higher. The upper limit of the difference between the resin temperature and the set temperature is not particularly limited, but is preferably a temperature at which the resin does not deteriorate by heat.

Examples of suitable twin screw extruders include the TEM series manufactured by Toshiba Machine Co., Ltd. In addition, examples of screw configurations of the extruder include a screw configuration having a conveying part that conveys the resin composition, and a kneading part for kneading the resin composition such as screw segments in which a kneading zone and a feeding direction of a molten resin are reversed (screw segments in which a spiral winding direction is reversed).

In addition, the extruder preferably has a vent capable of degassing the moisture in the resin composition, which is the raw material of the molded body, and the volatile gas generated from the melt-kneaded resin. As such a vent, a pressure reduction pump such as a vacuum pump is suitably used, for example. By having such a vent, the moisture and the volatile gas generated from the resin composition are efficiently discharged to the outside of the extruder. In addition, contaminants and the like can be removed from the resin composition by installing a screen, which is for removing contaminants and the like mixed in the resin composition as a raw material, in the zone in front of a die part of the extruder. Examples of such a screen include a wire mesh, a screen changer, and a sintered metal plate (a disc filter or the like).

A film of the present embodiment can be manufactured by molding the melt-kneaded resin composition as described above.

A method for molding the film of the present embodiment is not particularly limited, and examples thereof include conventionally known methods such as a melting casting method; a T-die method; a melting extrusion method such as an inflation method; and a calendar method, among which the T-die method is preferable from the viewpoint of economic efficiency. In addition, the melting temperature during molding is preferably 100°C to 280°C.

When the melting extrusion molding of the resin composition is performed by a method such as the T-die method, from the viewpoint of reducing fisheyes in the film, it is preferable to extrude while filtering the resin composition in a molten state through a screen mesh of 200 mesh or more.

The formulation of each of raw materials constituting the film of the present embodiment is the same as the formulation described in the above-mentioned resin composition, and the preferable range is also the same.

The thickness of the film of the present embodiment is not particularly limited, but is preferably 20 $\mu$m or more, is more preferably 30 $\mu$m or more, and is further preferably 40 $\mu$m or more from the viewpoint of embossing processability, weather resistance, film-forming properties, and the like. Meanwhile, from the viewpoint of economic efficiency, the thickness of the film is preferably 300 $\mu$m or less, is more preferably 200 $\mu$m or less, and is further preferably 100 $\mu$m or less.

The "thickness" described in the present specification is a value obtained by measuring thicknesses at any five points on the film or the like with a dial gauge using a stylus, a micrometer, or the like, and calculating an average value thereof.

The 85° gloss level of the film is preferably 15% or less, more preferably 0.1% or more and less than 15%, further preferably 0.1% or more and 13% or less, and particularly preferably 0.2% or more and 10% or less.

The "85° gloss level" described in the present specification is a value measured by a method described in Examples.

In addition, the film of the present embodiment can also be used as, for example, a laminate film in which another film is laminated on the surface of the film of the present embodiment. The materials constituting the above-mentioned other films are not particularly limited, but it is preferable to use a resin having a surface hardness higher than that of the film of the present embodiment when the purpose is to improve the surface hardness, for example. As the above-mentioned other films, for example, a laminate film having molding whitening resistance, surface hardness (scratch resistance), and heat resistance is obtained by using an acrylic resin having a pencil hardness (measured by a method in accordance with JIS K 5400) of 2H or higher.

In addition, from the viewpoint of improving weather resistance and solvent resistance, a fluororesin may be laminated as the above-mentioned other films. The type of such a fluororesin is not particularly limited, and a conventionally known fluororesin can be used. Specific examples of the above-mentioned fluororesin include fluorine compounds such as a vinylidene fluoride polymer, vinylidene fluoride and vinyl fluoride, and tetrafluoroethylene; or copolymers of acrylic monomers such as acrylic acid alkyl esters and methacrylic acid alkyl esters with vinylidene fluoride; or resin compositions containing a vinylidene fluoride polymer as a main component.

As necessary, the above-mentioned fluororesin layer can contain general compounding agents such as stabilizers, lubricants, processing aids, plasticizers, impact resistance agents, blowing agents, fillers, antibacterial agents, fungicides, mold release agents, antistatic agents, colorants, matting agents, ultraviolet absorbers, light stabilizers, or the like.

Examples of a method for laminating another resin film on the surface of the film of the present embodiment include the following methods (1) to (4).

(1) A method for laminating the film according to the present embodiment and another resin film.
(2) A method for laminating the film according to the present embodiment on another resin film while melt-extruding the film according to the present embodiment at the same time.
(3) A method for laminating another resin on the film according to the present embodiment while melt-extruding the other resin into a film shape at the same time.
(4) A method for laminating the resin composition according to the present embodiment and another resin at the same time while melt-extruding them into a film shape at the same time.

<Decorative sheet protective film and decorative plate>

The film of the present embodiment can be laminated on a substrate, for example, and is also used as a decorative sheet protective film. In addition, the film of the present invention is provided as a decorative plate by being laminated on a substrate. FIG. 1 is an example representing the decorative plate. In FIG. 1, a film formed from the resin composition of the present invention is laminated as a decorative sheet protective film 1 on a substrate 2 to form a decorative plate 10. For example, by using the transparent film of the present embodiment as it is to laminate it on the substrate, the film of the present embodiment can be used as a coating substitute having high transparency. Thereby, the color tone of the substrate can be expressed. As described above, in the applications in which the color tone of the substrate is expressed, the film of the present embodiment is excellent in terms of a depth feeling and a luxurious feeling in addition to transparency, as compared to a polyvinyl chloride film, a polyester film, and the like.

The substrate on which the film according to the present embodiment is laminated is not particularly limited, and examples thereof include various resin molded products, wood products, and metal molded products. In addition, examples of thermoplastic resins constituting resin molded products that can be melt-adhered to the film of the present embodiment among the above-mentioned resin molded products include an ABS resin, an AS resin, a polystyrene resin, a polycarbonate resin, a vinyl chloride resin, an acrylic resin, a polyester resin, and a resin containing these as main components. Among these thermoplastic resins, an ABS resin, an AS resin, a polycarbonate resin, a vinyl chloride resin, or a resin containing these resins as main components is particularly preferable from the viewpoint of the adhesiveness to the film of the present embodiment.

Even when a substrate made of a resin that is difficult to be melt-adhered, such as a polyolefin resin, is used, the film of the present embodiment and the substrate can be adhered to each other by using an adhesive layer.

In addition, when laminating the film of the present embodiment on a substrate having a thin thickness and having a substantially two-dimensional shape, bonding to a substrate made of a heat-sealable resin can be performed by a conventionally known method such as heat lamination, for example. In addition, when laminating the film of the present embodiment on a decorative sheet such as a vinyl chloride resin, they can be bonded to each other by subjecting the film on embossing processing at the time of lamination. When the film of the present embodiment is used by being laminated on a decorative sheet, the decorative sheet having favorable embossing processability and ultra-low gloss is obtained.

In addition, for a substrate made of a material that is difficult to be heat-sealed, bonding can be performed by, for example, using an adhesive or using a method of performing pressure-sensitive adhesion processing on one surface of the film of the present embodiment.

In the field of industrial use of the laminate obtained by laminating the film of the present embodiment as described above, the laminate is very useful as a protective film for indoor building material members such as decorative sheets, for example, making the industrial value high. In addition, the laminate is very useful as a protective film for water-related members in bathrooms, kitchens, and the like, and for outdoor building material parts such as siding materials, and can also be used for applications other than these. In particular, the film having favorable external appearance characteristics can also be applied to a polarizing film protective film used for polarizing plates in liquid crystal displays and the like, or to a phase difference film used for phase difference plates for view angle compensation and phase difference compensation, for example.

<Action effect>

As described above, according to the resin composition of the present invention, the following constitution is employed: the rubber-containing polymer having an average particle diameter of 200 nm or more, the thermoplastic resin having a mass average molecular weight of 100,000 or less, and the plasticizer are contained, in which the ratio of the plasticizer with respect to 100 parts by mass as the total amount of the rubber-containing polymer and the thermoplastic resin is 1 to 20 parts by mass. Furthermore, according to the resin composition of the present invention, the following constitution is also employed: the rubber-containing polymer having an average particle diameter of 200 nm or more, the thermoplastic resin having a storage elastic modulus G' of $0.1 \times 10^5$ to $1.2 \times 10^5$ Pa at 200°C, and the plasticizer are contained, in which the ratio of the plasticizer with respect to 100 parts by mass as the total amount of the rubber-containing polymer and the thermoplastic resin is 1 to 20 parts by mass. This makes it possible to inhibit sticking of films to each other from occurring when the films are recovered by being wound into a roll shape in manufacturing the molded body such as a film or the like using the resin composition of the present invention. Thereby, external appearance characteristics are favorable, and embossing processability for the film, which is the molded body, is also improved. Accordingly, it is possible to provide the resin composition which makes it possible to obtain a film having favorable external appearance characteristics and excellent embossing processability.

Furthermore, the molded body and the film of the present invention contain the above-mentioned resin composition according to the present invention, and thus have excellent external appearance characteristics and are also excellent in embossing processability.

[Examples]

Hereinafter, the resin composition, the molded body, and the film of the present invention will be described in more detail with reference to examples, but the present invention is not limited to these examples.

In the following description, "parts" represents "parts by mass", and "%" represents "% by mass".

In addition, abbreviations of compounds used in the following description are as follows.

MMA: methyl methacrylate
MA: methyl acrylate
n-BA: n-butyl acrylate
St: styrene
1,3-BD: 1,3-butylene glycol dimethacrylate
AMA: allyl methacrylate
CHP: cumene hydroperoxide
t-BH: t-butyl hydroperoxide

n-OM: n-octyl mercaptan
EDTA: disodium ethylenediaminetetraacetate
SFS: sodium formaldehyde sulfoxylate (Rongalite)
RS610NA: sodium polyoxyethylene alkyl ether phosphate (trade name: PHOSPHANOL RS610NA (registered trademark); manufactured by TOHO Chemical Industry Co., Ltd.)
AMBN: 2,2'-azobis-2-methylbutyronitrile (trade name: V-59; manufactured by Wako Pure Chemical Industries, Ltd.)

<Evaluation method>

Various evaluations of the resin composition and the film (molded body) were carried out by the following methods (1) to (6).

(1) Average particle diameter of rubber-containing polymer

The particle diameter of a polymer latex of the rubber-containing polymer obtained by emulsion polymerization was measured by a dynamic light scattering method using a light scattering photometer DLS-700 manufactured by Otsuka Electronics Co., Ltd. to obtain an average particle diameter.

(2) Gel content of rubber-containing polymer and resin composition

A predetermined amount (mass before extraction) of the rubber-containing polymer was subjected to an extraction treatment under reflux in an acetone solvent. This treatment liquid was separated by centrifugation to dry the acetone-insoluble matter. Thereafter, the mass was measured (mass after extraction) to calculate Formula (a).

$$\text{Gel content (\%)} = \text{mass after extraction (g)/mass before extraction (g)} \times 100...(a)$$

(3) Sticking resistance (blocking resistance) of film

20 films obtained by melting extrusion molding of the resin composition were superimposed and left to stand for 1 day under the conditions of a room temperature of 23°C and a humidity of 50%. Visual observation was made from the surface to evaluate sticking resistance (blocking resistance properties) according to the following criteria.

O: no sticking was observed between the films.
X: sticking was observed between the films.

(4) Embossing processability of film

The obtained film was placed on an embossing metal mold heated to 200°C (arithmetic average roughness Ra of 3 nm, maximum height Rz of 23 nm), and a 6 cm square 82 g SUS plate was placed thereon for 1 minute to perform embossing processing. An 85° gloss value of the film after the processing was measured and evaluated according to the following criteria. The 85° gloss value was measured by an ASTM D523 method.

O: the 85° gloss value was less than 15%.
X: the 85° gloss value was 15% or more.

(5) Breaking elongation of film

The obtained film was tested in a tensile test in accordance with ISO 527 with a measurement temperature of 23°C, with a test piece width of 1.5 mm, a distance between chucks of 100 mm, and a tensile rate of 100 mm/minute. Thereby, the breaking elongation was obtained and evaluated according to the following criteria.

O: the breaking elongation was 20% or more.
X: the breaking elongation was less than 20%.

(6) Mass average molecular weight of thermoplastic resin

A polystyrene conversion value measured by the gel permeation chromatography (GPC) method under the following conditions was used as the mass average molecular weight of the thermoplastic resin.

<Measurement conditions>

- High-speed GPC device (manufactured by TOSOH CORPORATION, product name: HLC-8220 GPC)
- Four columns (manufactured by TOSOH CORPORATION, product name: TSKgel SuperHZM-M) connected in series were used.
- Oven temperature: 40°C
- Eluent: tetrahydrofuran
- Sample concentration: 0.1% by mass
- Eluent flow rate: 0.35 mL/minute
- Sample injection volume: 1 $\mu$L
- Detector: RI (differential refractometer)

<Preparation Example 1>

[Production of rubber-containing polymer (G1)]

206 parts of deionized water was put into a polymerization container equipped with a reflux condenser. Thereafter, the temperature was raised to 80°C. Subsequently, a mixed aqueous solution of 0.25 parts of SFS, 0.00025 parts of ferrous sulfate, and 0.00075 parts of EDTA was added to the deionized water in the polymerization container. While stirring in a nitrogen atmosphere, 1/15 of a first stage monomer mixture of a monomer mixture containing an acrylic acid ester as a main component was put, and 15 minutes were held.
Subsequently, the remainder of the first stage monomer mixture was added dropwise such that the increase rate of the first stage monomer mixture with respect to the deionized water was 8 %/hour. Thereafter, after holding for 60 minutes, a latex of the polymer was obtained.
The polymer, which was obtained from the first stage monomer mixture of the monomer mixture containing an acrylic acid ester as a main component as described above, had a glass transition temperature Tg of 4°C which was obtained from a FOX equation.
Subsequently, 0.125 parts of SFS was further added to the latex of the above-mentioned polymer, and 15 minutes were held.
Subsequently, while stirring at a temperature of 80°C in a nitrogen atmosphere, a second stage monomer mixture of the monomer mixture containing an acrylic acid ester as a main component as described below was added dropwise such that the increase rate of the second stage monomer mixture with respect to the deionized water was 4 %/hour. Thereafter, after holding for 120 minutes, a latex of the polymer was obtained.
The polymer, which was obtained from the second stage monomer mixture of the monomer mixture containing an acrylic acid ester as a main component as described above, had a glass transition temperature Tg of -38°C which was obtained from the FOX equation.
In addition, in the above-mentioned two-stage polymerization, the polymer, which was a rubber component obtained from the monomer mixture containing an acrylic acid ester as a main component, had a glass transition temperature Tg of -23°C which was obtained from the FOX equation.
Subsequently, 0.125 parts of SFS was further added to the latex of the above-mentioned polymer, and 15 minutes were held.
Subsequently, while stirring at 80°C in a nitrogen atmosphere, the following monomer mixture, which contained a methacrylic acid ester as a main component and was a graft component, was added dropwise such that the increase rate of the monomer mixture containing a methacrylic acid ester as a main component with respect to the deionized water was 10 %/hour. Thereafter, after holding for 60 minutes, a polymer latex of the rubber-containing polymer (G1) was obtained.
The polymer, which was obtained from the monomer mixture containing a methacrylic acid ester as a main component as described above, had a glass transition temperature Tg of 99°C which was obtained from the FOX equation.
In addition, the average particle diameter of the obtained rubber-containing polymer (G1) was 280 nm.
Then, the polymer latex of the obtained rubber-containing polymer (G1) was filtered using a vibrating type filtration device in which a SUS (stainless steel) mesh (average aperture 500 $\mu$m) was attached to a filtering medium. Thereafter, salting-out was carried out in an aqueous solution containing 3.5 parts of calcium acetate. Furthermore, after washing with water to recover the solid content, drying was performed to obtain a powdery rubber-containing polymer (G1). The gel content of the obtained rubber-containing polymer (G1) was 90%.

(First stage monomer mixture of monomer mixture containing acrylic acid ester as main component)

MMA: 11.3 parts
n-BA: 12.5 parts
St: 1.2 parts
AMA: 1.9 parts
1,3-BD: 1.5 parts
t-BH: 0.04 parts
RS610NA: 0.75 parts

(Second stage monomer mixture of monomer mixture containing acrylic acid ester as main component)

n-BA: 30.9 parts
St: 6.6 parts
AMA: 0.66 parts
1,3-BD: 0.1 parts
CHP: 0.11 parts
RS610NA: 0.6 parts

(Monomer mixture containing methacrylic acid ester as main component)

MMA: 35.6 parts
MA: 1.88 parts
n-OM: 0.11 parts
t-BH: 0.06 parts

<Preparation Example 2>

[Production of rubber-containing polymer (G2)]

10.8 parts of deionized water was put in a container equipped with a stirrer. Thereafter, a first stage monomer mixture of a monomer mixture containing an acrylic acid ester as a main component was added, and stirred and mixed at room temperature.

Subsequently, while continuing to stir, 1.1 parts of an emulsifier (manufactured by TOHO Chemical Industry Co., Ltd., trade name "PHOSPHANOL RS610NA" (registered trademark)) was put into the above-mentioned container, and stirring was continued for 20 minutes to prepare "Emulsified liquid 1".

Subsequently, 155.8 parts of deionized water was put into a polymerization container equipped with a condenser. Thereafter, the temperature was raised to 75°C. Furthermore, a mixture was prepared by adding 0.0001 parts of ferrous sulfate and 0.0003 parts of EDTA to 2.0 parts of deionized water. This mixture was put into the above-mentioned polymerization container. Subsequently, 0.20 parts of sodium formaldehyde sulfoxylate was added in 0.8 parts of deionized water and put into the above-mentioned polymerization container at a time.

Subsequently, while stirring in a nitrogen atmosphere, Emulsified liquid 1 mentioned above was added dropwise into the polymerization container over 8 minutes. Thereafter, the reaction was continued for 15 minutes to complete the polymerization of an elastic polymer (G2-1). Subsequently, a second stage monomer mixture of the monomer mixture containing an acrylic acid ester as a main component was added dropwise into the above-mentioned polymerization container over 90 minutes. Thereafter, the reaction was continued for 60 minutes to generate an elastic polymer (G2-2).

By the above-mentioned procedure and conditions, an elastic polymer (G2-A), which was a rubber component containing the elastic polymer (G2-1) and the elastic polymer (G2-2), was obtained. When each monomer component for the elastic polymer (G2-1) and for the elastic polymer (G2-2) was independently polymerized under the same conditions as the above-mentioned conditions, the obtained elastic polymer (G2-1) and elastic polymer (G2-2) both had a glass transition temperature Tg of -48°C.

Subsequently, the monomer mixture, which was a rubber component, which contained a methacrylic acid ester as a main component, and which served as an intermediate layer, was added dropwise to the above-mentioned polymerization container over 45 minutes. Thereafter, the reaction was continued for 60 minutes to form an intermediate polymer (G2-B). When each of the monomer components for the intermediate polymer (G2-B) was separately polymerized under the same conditions as the above-mentioned conditions, the glass transition temperature Tg of the obtained intermediate polymer (G2-B) was 20°C.

Subsequently, a monomer mixture which was a hard polymer containing a methacrylic acid ester as a main component and was a graft component was added dropwise into the above-mentioned polymerization container over 140 minutes. Thereafter, the reaction was continued for 140 minutes to form a hard polymer (G2-C), thereby obtaining a polymer latex of the rubber-containing polymer (G2). The average particle diameter of the obtained rubber-containing polymer (G2) was 130 nm.

Then, the polymer latex of the obtained rubber-containing polymer (G2) was filtered using a vibrating type filtration device in which a SUS mesh (average aperture: 54 $\mu$m) was attached to a filtering medium. Thereafter, salting-out was carried out in an aqueous solution containing 3.0 parts of calcium acetate. Furthermore, after washing with water to recover, drying was performed to obtain a powdery rubber-containing polymer (G2). The gel content of the obtained rubber-containing polymer (G2) was 57%.

(First stage monomer mixture of monomer mixture containing acrylic acid ester as main component)

MMA: 0.3 parts
n-BA: 22.5 parts
1,3-BD: 1.0 part
AMA: 0.05 parts
CHP: 0.025 parts

(Second stage monomer mixture of monomer mixture containing acrylic acid ester as main component)

MMA: 1.5 parts
n-BA: 4.5 parts
1,3-BD: 0.2 parts
AMA: 0.25 parts
CHP: 0.016 parts

(Monomer mixture containing methacrylic acid ester as main component and serving as intermediate layer)

MMA: 6.0 parts
n-BA: 4.0 parts
AMA: 0.075 parts
CHP: 0.0125 parts

(Monomer mixture which was hard polymer containing methacrylic acid ester as main component)

MMA: 55.2 parts
n-BA: 4.8 parts
t-BH: 0.075 parts
n-OM: 0.22 parts

<Preparation Example 3: dispersant (S-1)>

900 parts of deionized water, 60 parts of sodium 2-sulfoethyl methacrylate, 10 parts of potassium methacrylate, and 12 parts of MMA were supplied into a flask equipped with a stirrer, a thermometer, and a condenser tube. While discharging nitrogen, heating was carried out such that the internal temperature of the flask was 50°C.

Subsequently, 0.08 part of 2,2'-azobis(2-methylpropionamidine) dihydrochloride was supplied into the flask, and heating was carried out such that the internal temperature of the flask was 60°C.

Then, using a dropping pump, MMA was added dropwise into the flask at a rate of 0.24 parts/minute for 75 minutes. Thereafter, 6 hours were held to obtain a dispersant (S-1) (solid content: 10% by mass).

<Preparation Example 4>

[Thermoplastic resin (D1)]

200 parts by mass of deionized water and 0.42 parts by mass of sodium sulfate were supplied into a separable flask equipped with a stirrer, a thermometer, a condenser tube, and a nitrogen gas inlet tube, and stirred for 15 minutes at a stirring speed of 320 rpm.

Subsequently, a monomer mixture (D1) containing a methacrylic acid ester as a main component as the monomer raw material was supplied into the separable flask and stirred for 5 minutes.

Subsequently, 0.672 parts by mass of the dispersant (S-1) was supplied to the separable flask and stirred to disperse the monomer mixture in the separable flask in water.

Subsequently, nitrogen gas was discharged into a separable flask for 15 minutes.

Subsequently, heating was carried out such that the internal temperature of the separable flask was 75°C, and the temperature was maintained until a polymerization exotherm peak was observed. After the polymerization exotherm peak was observed, heating was further carried out such that the internal temperature of the separable flask was 90°C. 60 minutes were held to complete the polymerization.

Then, the mixture in the separable flask was filtered, and the filtrate was washed with deionized water. Thereafter, drying was performed at 90°C for 24 hours using a steam dryer to obtain beads of a thermoplastic resin (D1). The mass average molecular weight of the obtained thermoplastic resin (D1) was 89,000, and the storage elastic modulus (G') thereof was $0.25 \times 10^5$ Pa at 200°C.

(Monomer mixture (D1) containing methacrylic acid ester as main component)

MMA: 87 parts
MA: 13 parts
AMBN: 0.28 parts
n-OM: 0.27 parts

<Preparation Example 5>

[Thermoplastic resin (D2)]

A thermoplastic resin (D2) was obtained in the same method as in Preparation Example 4 above except that the monomer mixture (D1) containing a methacrylic acid ester as a main component as a monomer raw material was changed to a monomer mixture (D2) containing a methacrylic acid ester as a main component as a monomer raw material. The mass average molecular weight of the obtained thermoplastic resin (D2) was 63,000, and the storage elastic modulus (G') thereof was $0.18 \times 10^5$ Pa at 200°C.

(Monomer mixture (D2) containing methacrylic acid ester as main component)

MMA: 90 parts
MA: 10 parts
AMBN: 0.28 parts
n-OM: 0.23 parts

<Preparation Example 6>

[Thermoplastic resin (D3)]

A thermoplastic resin (D3) was obtained in the same method as in Preparation Example 4 above except that the monomer mixture (D1) containing a methacrylic acid ester as a main component as a monomer raw material was changed to a monomer mixture (D3) containing a methacrylic acid ester as a main component as a monomer raw material. The mass average molecular weight of the obtained thermoplastic resin (D3) was 95,000, and the storage elastic modulus (G') thereof was $0.53 \times 10^5$ Pa at 200°C.

(Monomer mixture (D3) containing methacrylic acid ester as main component)

MMA: 90 parts
MA: 10 parts
AMBN: 0.28 parts
n-OM: 0.21 parts

<Preparation Example 7>

[Thermoplastic resin (D4)]

A thermoplastic resin (D4) was obtained in the same method as in Preparation Example 4 above except that the monomer mixture (D1) containing a methacrylic acid ester as a main component as a monomer raw material was changed to a monomer mixture (D4) containing a methacrylic acid ester as a main component as a monomer raw material. The mass average molecular weight of the obtained thermoplastic resin (D4) was 68,000, and the storage elastic modulus (G') thereof was $0.74 \times 10^5$ Pa at 200°C.

(Monomer mixture (D4) containing methacrylic acid ester as main component)

MMA: 99 parts
MA: 1 part
AMBN: 0.28 parts
n-OM: 0.3 parts

<Preparation Example 8>

[Thermoplastic resin (D5)]

A thermoplastic resin (D5) was obtained in the same method as in Preparation Example 4 except that the monomer mixture (D1) containing a methacrylic acid ester as a main component as a monomer raw material was changed to a monomer mixture (D5) containing a methacrylic acid ester as a main component as a monomer raw material. The mass average molecular weight of the obtained thermoplastic resin (D5) was 103,000, and the storage elastic modulus (G') thereof was $1.33 \times 10^5$ Pa at 200°C.

(Monomer mixture (D5) containing methacrylic acid ester as main component)

MMA: 97 parts
MA: 3 parts
AMBN: 0.28 parts
n-OM: 0.22 parts

<Example 1>

To a resin composition containing 20 parts of the rubber-containing polymer (G1) and 80 parts of the thermoplastic resin (D1) obtained in Preparation Example 1, a plasticizer (K), a light stabilizer (L), and an antioxidant were added in the blending amounts shown in Table 1 below, and were mixed using a Henschel mixer to obtain a resin composition.

As the above-mentioned plasticizer (K), PEG 20000 (trade name, number average molecular weight: 20,000) manufactured by Sanyo Chemical Industries, Ltd., which was polyethylene glycol, was used. As the above-mentioned light stabilizer (L), CHIMASSORB 2020 FDL (trade name: registered trademark, molecular weight: 2,600 to 3,400) manufactured by BASF Japan Ltd., which was a hindered amine light stabilizer, was used. As the above-mentioned antioxidant, IRGANOX 1076 (trade name: registered trademark, molecular weight: 531), which was a hindered phenol antioxidant manufactured by BASF, was used.

Subsequently, the above-mentioned resin composition was supplied to a degassing type twin screw kneading extruder (manufactured by Toshiba Machine Co., Ltd., trade name: TEM-35B) heated to 240°C, and by kneading, pellets of the acrylic resin composition were obtained. The resin temperature at an extruder nozzle outlet when the resin composition was extruded was 285°C.

The MFR of the obtained resin composition was 2.6 g/10 minute under the conditions of 180°C and 49 N, and was 9.3 g/10 minute under the conditions of 200°C and 49 N.

Subsequently, the pellets of the obtained resin composition were subjected to molding processing using a 30 mm$\varphi$ (diameter) non-vented screw extruder (LID = 26) equipped with a 150 mm wide T die under the conditions of a cylinder temperature of 200°C to 240°C, a T-die temperature of 240°C, and a cooling roll temperature of 80°C, and thereby a film having a thickness of 100 $\mu$m was manufactured.

Then, an evaluation test was performed on the obtained film based on the above-mentioned evaluation methods, and the results are shown in Table 1 below.

<Example 2>

A film was manufactured in the same method as in Example 1 except that the thermoplastic resin (D2) of Preparation Example 5 was used instead of the thermoplastic resin (D1) of Preparation Example 4. The evaluation was performed in the same manner.

In addition, in Example 2, the resin temperature at an extruder nozzle outlet when the resin composition was extruded was 284°C.

The MFR of the resin composition obtained in Example 2 was 3.0 g/10 minute under the conditions of 180°C and 49 N, and was 12.5 g/10 minute under the conditions of 200°C and 49 N.

The evaluation results in Example 2 are shown in Table 1 below.

<Example 3>

A film was manufactured in the same method as in Example 1 except that the thermoplastic resin (D4) of Preparation Example 7 was used instead of the thermoplastic resin (D1) of Preparation Example 4. The evaluation was performed in the same manner.

In addition, in Example 3, the resin temperature at an extruder nozzle outlet when the resin composition was extruded was 284°C.

The MFR of the resin composition obtained in Example 3 was 2.2 g/10 minute under the conditions of 180°C and 49 N, and was 8.9 g/10 minute under the conditions of 200°C and 49 N.

The evaluation results in Example 3 are shown in Table 1 below.

<Example 4>

A film was manufactured in the same method as in Example 1 except that 10 parts of the rubber-containing polymer (G1) of Example 1 and 90 parts of the thermoplastic resin (D2) were used. The evaluation was performed in the same manner.

In addition, in Example 4, the resin temperature at an extruder nozzle outlet when the resin composition was extruded was 282°C.

The MFR of the resin composition obtained in Example 4 was 3.5 g/10 minute under the conditions of 180°C and 49 N, and was 13.7 g/10 minute under the conditions of 200°C and 49 N.

The evaluation results in Example 4 are shown in Table 1 below.

<Example 5>

A film was manufactured in the same method as in Example 1 except that 30 parts of the rubber-containing polymer (G1) of Example 1 and 70 parts of the thermoplastic resin (D2) were used. The evaluation was performed in the same manner.

In addition, in Example 4, the resin temperature at an extruder nozzle outlet when the resin composition was extruded was 284°C.

The MFR of the resin composition obtained in Example 5 was 2.1 g/10 minute under the conditions of 180°C and 49 N, and was 8.8 g/10 minute under the conditions of 200°C and 49 N.

The evaluation results in Example 5 are shown in Table 1 below.

<Comparative Example 1>

A film was manufactured in the same method as in Example 1 except that the thermoplastic resin (D5) of Preparation Example 8 was used instead of the thermoplastic resin (D1) of Preparation Example 4. The evaluation was performed in the same manner.

In addition, in Comparative Example 1, the resin temperature at an extruder nozzle outlet when the resin composition was extruded was 287°C.

The MFR of the resin composition obtained in Comparative Example 1 was 0.3 g/10 minute under the conditions of 180°C and 49 N, and was 1.4 g/10 minute under the conditions of 200°C and 49 N.

The evaluation results in Comparative Example 1 are shown in Table 1 below.

<Comparative Example 2>

A film was manufactured in the same method as in Example 1 except that the rubber-containing polymer (G2) of Preparation Example 2 was used instead of the rubber-containing polymer (G1) of Preparation Example 1. The evaluation was performed in the same manner.

In addition, in Comparative Example 2, the resin temperature at an extruder nozzle outlet when the resin composition was extruded was 284°C.

The MFR of the resin composition obtained in Comparative Example 2 was 2.7 g/10 minute under the conditions of 180°C and 49 N, and was 10.1 g/10 minute under the conditions of 200°C and 49 N.

The evaluation results in Comparative Example 2 are shown in Table 1 below.

<Comparative Example 3>

A film was manufactured in the same method as in Example 2 except that the rubber-containing polymer (G2) of Preparation Example 2 was used instead of the rubber-containing polymer (G1) of Preparation Example 1. The evaluation was performed in the same manner.

In addition, in Comparative Example 3, the resin temperature at an extruder nozzle outlet when the resin composition was extruded was 283°C.

The MFR of the resin composition obtained in Comparative Example 3 was 3.3 g/10 minute under the conditions of 180°C and 49 N, and was 13.3 g/10 minute under the conditions of 200°C and 49 N.

The evaluation results in Comparative Example 3 are shown in Table 1 below.

<Comparative Example 4>

A film was manufactured in the same method as in Example 3 except that the rubber-containing polymer (G2) of Preparation Example 2 was used instead of the rubber-containing polymer (G1) of Preparation Example 1. The evaluation was performed in the same manner.

In addition, in Comparative Example 4, the resin temperature at an extruder nozzle outlet when the resin composition was extruded was 283°C.

The MFR of the resin composition obtained in Comparative Example 4 was 1.2 g/10 minute under the conditions of 180°C and 49 N, and was 4.4 g/10 minute under the conditions of 200°C and 49 N.

The evaluation results in Comparative Example 4 are shown in Table 1 below.

<Comparative Example 5>

A film was manufactured in the same method as in Example 1 except that the rubber-containing polymer (G2) of Preparation Example 2 was used instead of the rubber-containing polymer (G1) of Preparation Example 1, and that the thermoplastic resin (D5) of Preparation Example 8 was used instead of the thermoplastic resin (D1) of Preparation Example 4. The evaluation was performed in the same manner.

In addition, in Comparative Example 5, the resin temperature at an extruder nozzle outlet when the resin composition was extruded was 286°C.

The MFR of the resin composition obtained in Comparative Example 5 was 0.4 g/10 minute under the conditions of 180°C and 49 N, and was 1.7 g/10 minute under the conditions of 200°C and 49 N.

The evaluation results in Comparative Example 5 are shown in Table 1 below.

<Comparative Example 6>

A film was manufactured in the same method as in Example 1 except that 50 parts of the rubber-containing polymer (G2) of Preparation Example 2 and 50 parts of the thermoplastic resin (D3) in Preparation Example 6 were used. The evaluation was performed in the same manner.

In addition, in Comparative Example 6, the resin temperature at an extruder nozzle outlet when the resin composition was extruded was 285°C.

The MFR of the resin composition obtained in Comparative Example 6 was 0.5 g/10 minute under the conditions of 180°C and 49 N, and was 2.0 g/10 minute under the conditions of 200°C and 49 N.

The evaluation results in Comparative Example 6 are shown in Table 1 below.

<Comparative Example 7>

A film was manufactured in the same method as in Example 1 except that 10 parts of the rubber-containing polymer (G1) of Preparation Example 1, 90 parts of the thermoplastic resin (D4) of Preparation Example 7, and 0 parts of the plasticizer (K) were used. The evaluation was performed in the same manner.

In addition, in Comparative Example 7, the resin temperature at an extruder nozzle outlet when the resin composition was extruded was 290°C.

The MFR of the resin composition obtained in Comparative Example 7 was 0.2 g/10 minute under the conditions of 180°C and 49 N, and was 1.4 g/10 minute under the conditions of 200°C and 49 N.

The evaluation results in Comparative Example 7 are shown in Table 1 below.

## [Table 1]

| | Rubber-containing polymer | | Thermoplastic polymer | | Plasticizer | Light stabilizer | Antioxidant | Gel content of resin composition (%) | Sticking resistance | Embossing properties | Breaking elongation |
|---|---|---|---|---|---|---|---|---|---|---|---|
| | Type | Amount (parts) | Type | Amount (parts) | Amount (parts) | Amount (parts) | Amount (parts) | | | | |
| Example 1 | G1 | 20 | D1 | 80 | 10 | 0.34 | 0.1 | 18 | O | O | O |
| Example 2 | G1 | 20 | D2 | 80 | 10 | 0.34 | 0.1 | 18 | O | O | O |
| Example 3 | G1 | 20 | D4 | 80 | 10 | 0.34 | 0.1 | 18 | O | O | O |
| Example 4 | G1 | 10 | D2 | 90 | 10 | 0.34 | 0.1 | 9 | O | O | X |
| Example 5 | G1 | 30 | D2 | 70 | 10 | 0.34 | 0.1 | 27 | O | O | O |
| Comparative Example 1 | G1 | 20 | D5 | 80 | 10 | 0.34 | 0.1 | 18 | X | X | O |
| Comparative Example 2 | G2 | 20 | D1 | 80 | 10 | 0.34 | 0.1 | 11 | X | O | X |
| Comparative Example 3 | G2 | 20 | D2 | 80 | 10 | 0.34 | 0.1 | 11 | X | O | X |
| Comparative Example 4 | G2 | 20 | D4 | 80 | 10 | 0.34 | 0.1 | 11 | X | O | X |
| Comparative Example 5 | G2 | 20 | D5 | 80 | 10 | 0.34 | 0.1 | 11 | X | X | X |
| Comparative Example 6 | G2 | 50 | D3 | 50 | 10 | 0.34 | 0.1 | 29 | X | X | O |
| Comparative Example 7 | G1 | 10 | D4 | 90 | 0 | 0.34 | 0.1 | 9 | O | X | X |

<Evaluation result>

As shown in Table 1, in the films obtained in Examples 1 to 5, sticking resistance (blocking resistance) was excellent with no sticking between the films, the breaking elongation of the films were favorable, and furthermore, embossing processability was also favorable.

On the other hand, in the films obtained in Comparative Examples 1 and 6, the breaking elongation was excellent, but sticking between the films was observed. Furthermore, the film of Comparative Example 1 was resulted in inferior embossing processability, and it was clarified that it was difficult to use the film for a decorative sheet having a matte external appearance, for example.

In addition, in the films of Comparative Examples 2 to 4, embossing processability was favorable, but sticking between the films tended to occur easily. Furthermore, the films of Comparative Examples 2 to 4 were resulted in a lower breaking elongation, and it was clarified that the films were inferior in handleability.

Furthermore, in the film of Comparative Example 5, sticking between the films occurred easily, and it was clarified that the film was inferior in embossing processability and breaking elongation.

Furthermore, in the film of Comparative Example 7, sticking between the films did not occur, but the results of the embossing processability and the breaking elongation of the film were low, and it was clarified that the film was inferior in handleability.

From the results of the examples described above, the occurrence of sticking between films can be prevented by manufacturing the film, which is a molded body, using the resin composition having the formulation defined in the present invention. Therefore, even when the film is recovered by being wound into a roll shape during manufacturing, it was clarified that the film having excellent external appearance characteristics can be manufactured. In addition, since the film obtained by molding processing of the resin composition of the present invention has excellent embossing processability, the film can also be applied to decorative sheets having a matte external appearance with ultra-low gloss, for example. Thus, it was clarified that a decorative sheet with ultra-low gloss can be constituted.

[Industrial Applicability]

As described above, the resin composition of the present invention makes it possible to obtain a film capable of preventing the occurrence of sticking during manufacturing, having favorable external appearance characteristics, and having excellent embossing processability.

Therefore, the resin composition of the present invention is suitable for applications where it is laminated on the surface of various molded products such as resin molded products, wood products, or metal molded products. In particular, since the resin composition is suitable for decorative sheets having a matte external appearance with ultra-low gloss, industrial applicability is extremely high.

[Reference Signs List]

1: Decorative sheet protective film
2: Substrate
10: Decorative plate

**Claims**

1. A resin composition comprising:

   a rubber-containing polymer having an average particle diameter of 200 nm or more;
   a thermoplastic resin having a mass average molecular weight of 100,000 or less; and
   a plasticizer,
   wherein a ratio of the plasticizer with respect to 100 parts by mass as a total amount of the rubber-containing polymer and the thermoplastic resin is 1 to 20 parts by mass.

2. A resin composition comprising:

   a rubber-containing polymer having an average particle diameter of 200 nm or more;
   a thermoplastic resin having a storage elastic modulus G' of $0.1 \times 10^5$ to $1.2 \times 10^5$ Pa at 200°C; and
   a plasticizer,
   wherein a ratio of the plasticizer with respect to 100 parts by mass as a total amount of the rubber-containing polymer and the thermoplastic resin is 1 to 20 parts by mass.

3. The resin composition according to Claim 1 or 2, wherein the rubber-containing polymer comprises a structural unit derived from an alkyl methacrylate.

4. The resin composition according to any one of Claims 1 to 3, wherein an average particle diameter of the rubber-containing polymer is 400 nm or less.

5. The resin composition according to any one of Claims 1 to 4, wherein a ratio of the rubber-containing polymer with respect to 100% by mass of the thermoplastic resin is 0.8% by mass or more and less than 60% by mass.

6. The resin composition according to any one of Claims 1 to 5, wherein a ratio of the thermoplastic resin with respect to 100% by mass of the resin composition is 62% by mass or more.

7. The resin composition according to any one of Claims 1 to 6, wherein a ratio of the thermoplastic resin with respect to 100% by mass of the resin composition is 98% by mass or less.

8. The resin composition according to any one of Claims 1 to 7, wherein a gel content of the resin composition with respect to 100% by mass of the resin composition is 40% by mass or less.

9. The resin composition according to any one of Claims 1 to 8, wherein the plasticizer is a polyalkylene glycol.

10. The resin composition according to any one of Claims 1 to 9, wherein a number average molecular weight of the plasticizer is 10,000 or more.

11. The resin composition according to any one of Claims 1 to 10, further comprising a hindered amine light stabilizer having a molecular weight of 500 or more.

12. A molded body comprising the resin composition according to any one of Claims 1 to 11.

13. A film comprising the resin composition according to any one of Claims 1 to 11.

14. The film according to Claim 13, wherein an 85° gloss level of the film is 15% or less.

15. A decorative sheet protective film which includes the film according to Claim 13 or 14 to be laminated on a substrate.

16. A decorative plate comprising:

a substrate; and
the film according to Claim 13 or 14 on the substrate.

FIG. 1

## INTERNATIONAL SEARCH REPORT

| International application No. |
| --- |
| **PCT/JP2022/012606** |

**A.    CLASSIFICATION OF SUBJECT MATTER**

*C08L 101/00*(2006.01)i; *C08J 5/18*(2006.01)i; *C08L 51/04*(2006.01)i; *C08L 71/02*(2006.01)i
FI:    C08L101/00; C08L71/02; C08L51/04; C08J5/18 CEY

According to International Patent Classification (IPC) or to both national classification and IPC

**B.    FIELDS SEARCHED**

Minimum documentation searched (classification system followed by classification symbols)

C08K3/00-13/08; C08L1/00-101/14; C08J5/00-5/02; C08J5/12-5/22

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| Y | WO 2014/167868 A1 (KURARAY CO., LTD.) 16 October 2014 (2014-10-16)<br>claims, paragraphs [0007], [0019], [0062], [0073], [0088], [0093], examples | 1-16 |
| Y | JP 2001-354819 A (MITSUBISHI RAYON CO., LTD.) 25 December 2001 (2001-12-25)<br>paragraphs [0059], [0067] | 1-16 |
| Y | WO 2011/074605 A1 (MITSUBISHI RAYON CO., LTD.) 23 June 2011 (2011-06-23)<br>claims, paragraphs [0006], [0084], [0086], examples | 1-16 |
| Y | JP 2006-299037 A (MITSUBISHI RAYON CO., LTD.) 02 November 2006 (2006-11-02)<br>claims, paragraphs [0009], [0026], [0037], [0073], [0084], examples | 1-16 |
| A | JP 2004-018746 A (MITSUBISHI RAYON CO., LTD.) 22 January 2004 (2004-01-22)<br>entire text | 1-16 |
| A | JP 2008-239739 A (TORAY IND., INC.) 09 October 2008 (2008-10-09)<br>entire text | 1-16 |
| A | JP 2006-143785 A (MITSUBISHI RAYON CO., LTD.) 08 June 2006 (2006-06-08)<br>entire text | 1-16 |

✓ Further documents are listed in the continuation of Box C.          ✓ See patent family annex.

| | |
| --- | --- |
| *    Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| **16 May 2022** | **31 May 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

| International application No. |
|---|
| **PCT/JP2022/012606** |

### C. DOCUMENTS CONSIDERED TO BE RELEVANT

| Category* | Citation of document, with indication, where appropriate, of the relevant passages | Relevant to claim No. |
|---|---|---|
| A | JP 2004-352841 A (UMG ABS LTD.) 16 December 2004 (2004-12-16)<br>entire text | 1-16 |
| A | WO 2019/021683 A1 (TECHNO-UMG CO., LTD.) 31 January 2019 (2019-01-31)<br>entire text | 1-16 |
| A | JP 2002-275341 A (MITSUBISHI RAYON CO., LTD.) 25 September 2002 (2002-09-25)<br>entire text | 1-16 |
| A | JP 2014-061705 A (MITSUBISHI RAYON CO., LTD.) 10 April 2014 (2014-04-10)<br>entire text | 1-16 |
| A | JP 11-080487 A (MITSUBISHI RAYON CO., LTD.) 26 March 1999 (1999-03-26)<br>entire text | 1-16 |
| A | JP 2003-342389 A (MITSUBISHI RAYON CO., LTD.) 03 December 2003 (2003-12-03)<br>entire text | 1-16 |

Form PCT/ISA/210 (second sheet) (January 2015)

**INTERNATIONAL SEARCH REPORT**
Information on patent family members

International application No.

**PCT/JP2022/012606**

| Patent document cited in search report | | | Publication date (day/month/year) | Patent family member(s) | | | Publication date (day/month/year) |
|---|---|---|---|---|---|---|---|
| WO | 2014/167868 | A1 | 16 October 2014 | US | 2016/0053062 | A1 | |
| | | | | claims, paragraphs [0017], [0040], [0104], [0119], [0139], [0144], examples | | | |
| | | | | EP | 2985313 | A1 | |
| | | | | CN | 105121543 | A | |
| | | | | KR | 10-2015-0142683 | A | |
| JP | 2001-354819 | A | 25 December 2001 | (Family: none) | | | |
| WO | 2011/074605 | A1 | 23 June 2011 | EP | 2514582 | A1 | |
| | | | | claims, paragraphs [0006], [0085], [0087], examples | | | |
| | | | | CN | 102712134 | A | |
| | | | | KR | 10-2012-0104338 | A | |
| JP | 2006-299037 | A | 02 November 2006 | (Family: none) | | | |
| JP | 2004-018746 | A | 22 January 2004 | (Family: none) | | | |
| JP | 2008-239739 | A | 09 October 2008 | (Family: none) | | | |
| JP | 2006-143785 | A | 08 June 2006 | (Family: none) | | | |
| JP | 2004-352841 | A | 16 December 2004 | (Family: none) | | | |
| WO | 2019/021683 | A1 | 31 January 2019 | US | 2020/0181307 | A1 | |
| | | | | entire text | | | |
| | | | | EP | 3660062 | A1 | |
| | | | | CN | 110891991 | A | |
| JP | 2002-275341 | A | 25 September 2002 | (Family: none) | | | |
| JP | 2014-061705 | A | 10 April 2014 | (Family: none) | | | |
| JP | 11-080487 | A | 26 March 1999 | US | 6509097 | B1 | |
| | | | | entire text | | | |
| | | | | EP | 1022311 | A1 | |
| | | | | CN | 1270612 | A | |
| | | | | KR | 10-0472903 | B1 | |
| JP | 2003-342389 | A | 03 December 2003 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021054555 A
- WO 2011074605 A

- JP 2017196814 A

**Non-patent literature cited in the description**

- Polymer HandBook. **J. BRANDRUP.** Interscience. 1989